# EUROPEAN PATENT APPLICATION

(11) **EP 4 806 774 A1**
(43) Date of publication of application: **16.09.2026**
(21) Application number: 24920242.5
(22) Date of filing: 29.07.2024
(51) Int. Cl.: B62J 45/00, B60L 3/00, B60L 50/60, B60L 58/10, B62J 45/42, B62J 45/415, H01M 10/48, H02J 7/00

(54) **BATTERY DEVICE AND SADDLE-TYPE ELECTRIC VEHICLE**

(30) Priority: 22.01.2024 JP 2024007303
(71) Applicant: Yamaha Hatsudoki Kabushiki Kaisha, Iwata-shi, Shizuoka 438-8501 (JP)
(72) Inventor: MIYASHIRO, Shidehiko, Iwata-shi, Shizuoka 438-8501 (JP); KONDO, Mitsuo, Iwata-shi, Shizuoka 438-8501 (JP)
(74) Representative: Grünecker Patent- und Rechtsanwälte PartG mbB
(86) International application number: PCT/JP2024/026956
(87) International publication number: WO 2025/158692

(57) **Abstract**

The present invention relates to a battery device 31 and a straddled electric vehicle 1. The battery device 31 includes a battery 32, an inclination sensor 38, and a control unit 41. The battery 32 supplies electric power to an electric motor 21. The electric motor 21 propels the straddled electric vehicle 1. An inclination angle θA detects an inclination angle θA of the battery 32. The control unit 41 acquires an accumulated time TA during which the battery 32 is in an inclined state on the basis of a detection result of the inclination sensor 38. The control unit 41 executes a specific operation on the battery 32 when the accumulated time TA exceeds a limit time TB.

## Description

### Technical Field

The present invention relates to a battery device and a straddled electric vehicle.

### Background Art

Patent Literature 1 discloses a battery system. The battery system is applied to, for example, an automobile. The automobile includes an electrical system. The electrical system is, for example, an audio facility. The battery system includes a battery, a detection module, and a control module. The battery supplies electric power to the electrical system. The control module controls supply of electric power from the battery to the electrical system according to a detection result of the detection module. Thereby, the electrical system is protected.

The detection module includes an accelerometer. The accelerometer detects an inclination angle of the battery. When the inclination angle of the battery detected by the accelerometer is significantly large, it is estimated that the automobile has overturned. Thus, when the inclination angle of the battery is significantly large, the control module stops supply of electric power from the battery to the electrical system. That is, when the inclination angle of the battery is significantly large, the control module stops discharging the battery.

The detection module includes a gas detection unit. The gas detection unit detects gas around the battery. When the gas detection unit detects a specific gas, it is determined that the electrolytic solution of the battery leaks. Thus, when the specific gas is detected around the battery, the control module stops supply of electric power from the battery to the electrical system. That is, when the specific gas is detected around the battery, the control module stops discharging the battery.

### Citation List

### Patent Literature

Patent Literature 1: JP 2013-251261 A

### Summary of Invention

### Technical Problem

In Patent Literature 1, the detection module does not detect deterioration of the storage capacity of the battery. For this reason, in Patent Literature 1, it is difficult to appropriately deal with deterioration of the storage capacity of the battery.

The present invention has been made in view of such circumstances, and an object thereof is to provide a battery device appropriately dealing with deterioration of the storage capacity of a battery, and a straddled electric vehicle including a battery device.

### Solution to Problem

As a result of intensive studies, the following first and second events were found.

First event: The battery may be in an inclined state for a long time.

Second event: When the battery is in an inclined state for a long time, the storage capacity of the battery may deteriorate.

When the battery is used in an automobile, the time during which the battery is in the inclined state is not long. Therefore, when the battery is for an automobile, the first event does not occur. The second event is a problem caused by the first event. Therefore, when the battery is for an automobile, the second event does not occur. The battery for an automobile does not have the problem of the second event. For this reason, probably, the second event has not been known to those skilled in the art. The second event is novel.

When the battery is used for a straddled electric vehicle, the time during which the battery is in the inclined state may be long. Therefore, when the battery is for a straddled electric vehicle, the first event may occur. Thus, when the battery is for a straddled electric vehicle, the second event may occur. In particular, when the battery is a device for propelling a straddled electric vehicle, the second event is likely to occur. In other words, the second event is likely to occur, particularly when the battery stores electric energy for propelling a straddled electric vehicle. The problem of the second event is a problem specific to a battery for a straddled electric vehicle.

The present invention has been made on the basis of the findings of the first event. The present invention has the following configuration.

That is, the present invention is a battery device including:
a battery supplying electric power to an electric motor propelling a straddled electric vehicle;
an inclination sensor detecting an inclination angle of the battery; and
a control unit acquiring an accumulated time during which the battery is in an inclined state on the basis of a detection result of the inclination sensor, and executing a specific operation on the battery when the accumulated time exceeds a limit time.

The battery device includes a battery, an inclination sensor, and a control unit. The battery supplies electric power to the electric motor. The electric motor propels the straddled electric vehicle. The inclination sensor detects an inclination angle of the battery. The control unit acquires an accumulated time during which the battery is in an inclined state on the basis of a detection result of the inclination sensor. When the accumulated time exceeds the limit time, the control unit executes the specific operation on the battery.

Here, when the accumulated time exceeds the limit time, the storage capacity of the battery may deteriorate. Therefore, when the storage capacity of the battery may deteriorate, the specific operation is executed. Therefore, when the storage capacity of the battery may deteriorate, the present battery device takes appropriate action to the battery. Therefore, the present battery device appropriately deals with deterioration of the storage capacity of the battery.

In the present battery device, the accumulated time is preferably a value obtained by integrating an inclination period during which the battery is in the inclined state.

Therefore, it is easy to obtain the accumulated time.

In the present battery device, it is preferable that the control unit measures an inclination period during which the battery is in the inclined state on the basis of the detection result of the inclination sensor, and integrates the inclination period to obtain the accumulated time.

Therefore, it is easy for the control unit to acquire the accumulated time.

In the present battery device, it is preferable that
the control unit includes:
a storage unit storing the limit time;
a time counting unit measuring an inclination period in which the battery is in the inclined state on the basis of the detection result of the inclination sensor, and integrating the inclination period to obtain the accumulated time;
a time determination unit comparing the limit time stored in the storage unit with the accumulated time obtained by the time counting unit, and determining whether the accumulated time exceeds the limit time; and
an execution unit executing the specific operation when the time determination unit determines that the accumulated time exceeds the limit time.

The control unit includes a storage unit, a time counting unit, a time determination unit, and an execution unit. The storage unit stores the limit time. The time counting unit measures the inclination period on the basis of the detection result of the inclination sensor. The inclination period is a period during which the battery is in the inclined state. The time counting unit integrates the inclination period to obtain the accumulated time. The time determination unit compares the limit time stored in the storage unit and the accumulated time obtained by the time counting unit. The time determination unit determines whether the accumulated time exceeds the limit time. When the time determination unit determines that the accumulated time exceeds the limit time, the execution unit executes the specific operation. Therefore, it is easy for the control unit to acquire the accumulated time on the basis of the detection result of the inclination sensor. It is easy for the control unit to execute the specific operation when the accumulated time exceeds the limit time.

In the present battery device, it is preferable that the inclined state of the battery is defined by the inclination angle of the battery.

Therefore, it is easy to determine whether the battery is in the inclined state. Thus, it is easy to measure the inclination period. Therefore, it is easy to acquire the accumulated time.

In the present battery device, it is preferable that
the inclined state is defined as a state of the battery when the inclination angle of the battery is equal to or greater than a reference angle, and
the inclination period is a period during which the inclination angle of the battery is equal to or greater than the reference angle.

The inclined state is defined as a state of the battery when the inclination angle of the battery is equal to or greater than the reference angle. Therefore, it is easier to determine whether the battery is in the inclined state. The inclination period is a period during which the inclination angle of the battery is equal to or greater than the reference angle. Therefore, it is easier to measure the inclination period. Thus, it is easy to acquire the accumulated time.

In the present battery device, it is preferable that
the storage unit stores the reference angle, and
the time counting unit measures the inclination period on the basis of the reference angle stored in the storage unit and the inclination angle of the battery detected by the inclination sensor.

Therefore, it is easy for the time counting unit to measure the inclination period. Furthermore, it is easy for the time counting unit to obtain the accumulated time.

In the present battery device, it is preferable that the limit time is shorter than a minimum value of the accumulated time required for deterioration of the storage capacity of the battery.

Therefore, when the specific operation is executed, the storage capacity of the battery has not yet deteriorated. Before the storage capacity of the battery deteriorates, the specific operation is executed. Therefore, the present battery device deals with deterioration of the storage capacity of the battery at an appropriate timing.

In the present battery device, it is preferable that the limit time is set on the basis of a relationship between the accumulated time and the storage capacity of the battery.

Therefore, the limit time is appropriately set.

In the present battery device, the limit time is preferably 1 year or more.

Therefore, the limit time is long. Thus, the accumulated time is monitored over a long period of time. Therefore, the present battery device appropriately deals with deterioration of the storage capacity of the battery.

In the present battery device, the limit time is preferably a constant.

Therefore, it is easy to specify the timing at which the accumulated time exceeds the limit time.

In the present battery device, the limit time is preferably a variable.

Therefore, it is easy to change the timing at which the accumulated time exceeds the limit time. In other words, it is easy to change the timing at which the specific operation is executed. It is easy to change the timing at which the present battery device deals with deterioration of the storage capacity of the battery.

In the present battery device, the limit time is preferably a variable that depends on the inclination angle of the battery in the inclined state.

Therefore, the timing at which the present battery device deals with deterioration of the storage capacity of the battery appropriately changes.

In the present battery device, it is preferable that the limit time decreases as the inclination angle of the battery in the inclined state increases.

Therefore, it is easy to set the limit time as a variable that depends on the inclination angle of the battery in the inclined state.

In the present battery device, it is preferable that
a gently inclined state is defined as a state of the battery when the inclination angle of the battery is equal to or greater than a small reference angle,
a steeply inclined state is defined as a state of the battery when the inclination angle of the battery is equal to or greater than a large reference angle,
the control unit acquires, on the basis of the detection result of the inclination sensor, a first accumulated time during which the battery is in the gently inclined state and a second accumulated time during which the battery is in the steeply inclined state,
the control unit executes the specific operation when the first accumulated time exceeds a first limit time or when the second accumulated time exceeds a second limit time,
the large reference angle is larger than the small reference angle, and
the second limit time is shorter than the first limit time.

Therefore, it is easy to set the limit time as a variable that depends on the inclination angle of the battery in the inclined state. Furthermore, it is easy to shorten the limit time as the inclination angle of the battery in the inclined state increases.

In the present battery device, it is preferable that
the battery includes:
   a case;
   a terminal attached to the case via an insulator; and
   an electrolytic solution stored inside the case,
the terminal penetrates the case and is inserted into the case from outside the case, and
the case and the electrolytic solution are electrically connected.

The battery has the above-described configuration. Therefore, when the battery is inclined, the terminal and the electrolytic solution may be electrically connected. Thus, when the battery is inclined, the terminal and the case may be electrically connected through the electrolytic solution. When the terminal and the case are electrically connected, the storage capacity of the battery may deteriorate. However, even when the battery has the above-described configuration, the present battery device appropriately deals with deterioration of the storage capacity of the battery. Rather, when the battery has the above-described configuration, the present battery device exhibits a remarkable effect.

In the present battery device, it is preferable that the case is in direct contact with the electrolytic solution.

Therefore, when the battery is inclined, the terminal and the case may be electrically connected through the electrolytic solution. Thus, the storage capacity of the battery may deteriorate. However, even when the case is in direct contact with the electrolytic solution, the present battery device appropriately deals with deterioration of the storage capacity of the battery.

In the present battery device, it is preferable that
the case is made of aluminum,
the terminal includes a negative electrode terminal, and
at least a part of the negative electrode terminal is made of copper.

The battery has the above-described configuration.

Therefore, when the battery is inclined, the case and the negative electrode terminal may be electrically connected through the electrolytic solution. When the case and the negative electrode terminal are electrically connected through the electrolytic solution, aluminum constituting the case and copper constituting the negative electrode terminal are electrically connected through the electrolytic solution. When aluminum of the case and copper of the negative electrode terminal are electrically connected through the electrolytic solution, the storage capacity of the battery easily deteriorates. However, even when the battery has the above-described configuration, the present battery device appropriately deals with deterioration of the storage capacity of the battery. Rather, when the battery has the above-described configuration, the present battery device exhibits a remarkable effect.

In the present battery device, it is preferable that
the case includes a top plate which is an upper part of the case,
the terminal penetrates the top plate and is inserted into the case from outside the case, and
the top plate and the terminal are electrically insulated by the insulator.

The battery has the above-described configuration. Therefore, when the battery is inclined, the terminal and the case may be electrically connected through the electrolytic solution. Thus, the storage capacity of the battery may deteriorate. However, even when the battery has the above-described configuration, the present battery device appropriately deals with deterioration of the storage capacity of the battery.

In the present battery device, it is preferable that the inclination angle of the battery is a first inclination angle between a first imaginary plane parallel to the top plate of the battery and a second imaginary plane perpendicular to a direction of gravity.

The inclination angle of the battery is the first inclination angle. The first inclination angle is an angle between the first imaginary plane and the second imaginary plane. Therefore, the first inclination angle is correlated with the positional relationship between the terminal and the electrolytic solution. Thus, the first inclination angle is suitable as an inclination angle of the battery for defining the inclined state of the battery.

In the present battery device, it is preferable that the inclination angle of the battery is a second inclination angle between a first imaginary plane parallel to the top plate of the battery and a third imaginary plane perpendicular to a direction of acceleration acting on the battery.

The inclination angle of the battery is the second inclination angle. The second inclination angle is an angle between the first imaginary plane and the third imaginary plane. Therefore, the second inclination angle is further correlated with the positional relationship between the terminal and the electrolytic solution. Thus, the second inclination angle is more suitable as an inclination angle of the battery for defining the inclined state of the battery.

In the present battery device, the direction of the acceleration acting on the battery is preferably a direction of a resultant force of gravity and a centrifugal force acting on the battery.

Therefore, the second inclination angle is defined in consideration of gravity and the centrifugal force acting on the battery. Thus, even when the straddled electric vehicle turns on a curved road, the second inclination angle is suitable as an inclination angle of the battery for defining the inclined state of the battery.

In the present battery device, it is preferable that the inclination sensor is attached to the battery.

Therefore, it is easy for the inclination sensor to detect the inclination angle of the battery.

In the present battery device, it is preferable that the specific operation includes a first operation of discharging the battery through a discharging unit.

In the first operation, the battery is discharged through the discharging unit. Therefore, it is easy to reduce the remaining capacity of the battery. Thus, it is difficult for the battery to discharge after the first operation. Therefore, the first operation appropriately deals with deterioration of the storage capacity of the battery.

In the present battery device, it is preferable that when the first operation is executed, the control unit electrically connects the battery to the discharging unit.

Therefore, it is easy to discharge the battery through the discharging unit in the first operation.

In the present battery device, it is preferable that
the battery device includes
   a first switch that electrically connects and disconnects the battery and the discharging unit, and
in the first operation, the control unit causes the first switch to electrically connect the battery and the discharging unit.

Therefore, it is easy for the control unit to electrically connect the battery to the discharging unit in the first operation.

In the present battery device, the discharging unit is preferably a resistor.

Therefore, it is easy for the discharging unit to consume the remaining capacity of the battery.

In the present battery device, it is preferable that
in a case where a first standby condition is satisfied when the accumulated time exceeds the limit time, the control unit waits for start of the first operation, and
the first standby condition is that an operation of the electric motor according to an operation of an accelerator of the straddled electric vehicle is allowed.

In a case where the first standby condition is satisfied when the accumulated time exceeds the limit time, the control unit does not discharge the battery through the discharging unit. Therefore, in a case where the first standby condition is satisfied when the accumulated time exceeds the limit time, the control unit allows the battery to supply sufficient electric power to the electric motor. Thus, in a case where the first standby condition is satisfied when the accumulated time exceeds the limit time, the electric motor operates smoothly according to the operation of the accelerator. Therefore, in a case where the first standby condition is satisfied when the accumulated time exceeds the limit time, it is easy for a driver of the straddled electric vehicle to drive the electric motor by operating the accelerator.

In the present battery device, it is preferable that the control unit waits for start of the first operation until the first standby condition is no longer satisfied.

Therefore, the battery device does not hinder the smooth operation of the electric motor according to the operation of the accelerator.

In the present battery device, it is preferable that the control unit starts the first operation when the first standby condition is no longer satisfied.

Therefore, the control unit starts the first operation at an appropriate timing.

In the present battery device, it is preferable that
in a case where a second standby condition is satisfied when the accumulated time exceeds the limit time, the control unit waits for start of the first operation, and
the second standby condition is that the straddled electric vehicle is traveling.

In a case where the second standby condition is satisfied when the accumulated time exceeds the limit time, the control unit does not discharge the battery through the discharging unit. Therefore, in a case where the second standby condition is satisfied when the accumulated time exceeds the limit time, the control unit allows the battery to supply sufficient electric power to the electric motor. Thus, in a case where the second standby condition is satisfied when the accumulated time exceeds the limit time, the electric motor smoothly propels the straddled electric vehicle. That is, in a case where the second standby condition is satisfied when the accumulated time exceeds the limit time, the straddled electric vehicle smoothly travels. Therefore, in a case where the second standby condition is satisfied when the accumulated time exceeds the limit time, it is easy for the driver to smoothly drive the straddled electric vehicle.

In the present battery device, it is preferable that the control unit waits for start of the first operation until the second standby condition is no longer satisfied.

Therefore, the battery device does not hinder the traveling of the straddled electric vehicle.

In the present battery device, it is preferable that the control unit starts the first operation when the second standby condition is no longer satisfied.

Therefore, the control unit starts the first operation at an appropriate timing.

In the present battery device, it is preferable that the control unit ends the first operation when a voltage of the battery is equal to or less than a reference voltage.

Therefore, the control unit ends the first operation at an appropriate timing.

In the present battery device, it is preferable that
the battery device includes
   a voltage sensor that detects a voltage of the battery, and
the control unit ends the first operation on the basis of a detection result of the voltage sensor.

Therefore, the control unit ends the first operation at an appropriate timing.

In the present battery device, it is preferable that the control unit electrically disconnects the battery from the discharging unit when the control unit ends the first operation.

Therefore, the first operation is appropriately ended.

In the present battery device, it is preferable that when the control unit ends the first operation, the control unit controls the first switch to electrically disconnect the battery from the discharging unit.

Therefore, it is easy for the control unit to electrically disconnect the battery from the discharging unit at the end of the first operation.

In the present battery device, it is preferable that the first operation is prohibited when the specific operation is not executed.

Therefore, the first operation is executed only when the specific operation is executed. Thus, the discharging unit is provided only for the specific operation. The discharging unit is used only in the specific operation. The discharging unit is exclusively for reducing the remaining capacity of the battery. Therefore, it is easier to reduce the remaining capacity of the battery in the first operation.

In the present battery device, it is preferable that the control unit electrically disconnects the battery from the discharging unit when the specific operation is not executed.

Therefore, it is easy to prohibit the first operation when the first operation is not executed.

In the present battery device, it is preferable that the specific operation includes a second operation of prohibiting supply of electric power from the battery to the electric motor.

Therefore, in the second operation, the battery is not used for propulsion of the straddled electric vehicle. Therefore, the second operation appropriately deals with deterioration of the storage capacity of the battery.

In the present battery device, it is preferable that in the second operation, the control unit electrically disconnects the battery from the electric motor.

Therefore, it is easy to prohibit supply of electric power from the battery to the electric motor in the second operation.

In the present battery device, it is preferable that
in a case where a first standby condition is satisfied when the accumulated time exceeds the limit time, the control unit waits for start of the second operation, and
the first standby condition is that an operation of the electric motor according to an operation of an accelerator of the straddled electric vehicle is allowed.

In a case where the first standby condition is satisfied when the accumulated time exceeds the limit time, the control unit does not prohibit supply of electric power from the battery to the electric motor. Therefore, in a case where the first standby condition is satisfied when the accumulated time exceeds the limit time, the control unit allows supply of electric power from the battery to the electric motor. Thus, in a case where the first standby condition is satisfied when the accumulated time exceeds the limit time, the electric motor operates smoothly according to the operation of the accelerator. Therefore, in a case where the first standby condition is satisfied when the accumulated time exceeds the limit time, it is easy for the driver of the straddled electric vehicle to drive the electric motor by operating the accelerator.

In the present battery device, it is preferable that the control unit waits for start of the second operation until the first standby condition is no longer satisfied.

Therefore, the battery device does not hinder the smooth operation of the electric motor according to the operation of the accelerator.

In the present battery device, it is preferable that the control unit starts the second operation when the first standby condition is no longer satisfied.

Therefore, the control unit starts the second operation at an appropriate timing.

In the present battery device, it is preferable that
in a case where a second standby condition is satisfied when the accumulated time exceeds the limit time, the control unit waits for start of the second operation, and
the second standby condition is that the straddled electric vehicle is traveling.

In a case where the second standby condition is satisfied when the accumulated time exceeds the limit time, the control unit does not prohibit supply of electric power from the battery to the electric motor. Therefore, in a case where the second standby condition is satisfied when the accumulated time exceeds the limit time, the control unit allows supply of electric power from the battery to the electric motor. Thus, in a case where the second standby condition is satisfied when the accumulated time exceeds the limit time, the electric motor smoothly propels the straddled electric vehicle. That is, in a case where the second standby condition is satisfied when the accumulated time exceeds the limit time, the straddled electric vehicle smoothly travels. Therefore, in a case where the second standby condition is satisfied when the accumulated time exceeds the limit time, it is easy for the driver to smoothly drive the straddled electric vehicle.

In the present battery device, it is preferable that the control unit waits for start of the second operation until the second standby condition is no longer satisfied.

Therefore, the battery device does not hinder the traveling of the straddled electric vehicle.

In the present battery device, it is preferable that the control unit starts the second operation when the second standby condition is no longer satisfied.

Therefore, the control unit starts the second operation at an appropriate timing.

In the present battery device, it is preferable that the control unit continues the second operation until the battery is replaced with a new battery.

Therefore, the second operation more appropriately deals with deterioration of the storage capacity of the battery.

In the present battery device, it is preferable that the control unit ends the second operation when the battery has been replaced with a new battery.

Therefore, the control unit ends the second operation at an appropriate timing.

In the present battery device, it is preferable that the specific operation includes a third operation of prohibiting charging of the battery.

In the third operation, the battery is not charged. Therefore, the third operation appropriately deals with deterioration of the storage capacity of the battery.

In the present battery device, it is preferable that in the third operation, the control unit electrically disconnects the battery from a power supply source.

Therefore, it is easy to prohibit charging of the battery in the third operation. In other words, it is easy to prohibit supply of electric power from the power supply source to the battery in the third operation.

In the present battery device, it is preferable that the control unit stops charging of the battery when the accumulated time exceeds the limit time during charging of the battery.

Therefore, it is easy for the control unit to quickly start the third operation.

In the present battery device, it is preferable that the control unit continues the third operation until the battery is replaced with a new battery.

Therefore, the third operation more appropriately deals with deterioration of the storage capacity of the battery.

In the present battery device, it is preferable that the control unit ends the third operation when the battery has been replaced with a new battery.

Therefore, the control unit ends the third operation at an appropriate timing.

In the present battery device, it is preferable that the specific operation includes a fourth operation of issuing an alarm from an output unit.

In the fourth operation, the alarm is issued from the output unit. Therefore, the fourth operation appropriately deals with deterioration of the storage capacity of the battery.

In the present battery device, it is preferable that the control unit continues the fourth operation until the battery is replaced with a new battery.

Therefore, the fourth operation more appropriately deals with deterioration of the storage capacity of the battery.

In the present battery device, it is preferable that the control unit ends the fourth operation when the battery has been replaced with a new battery.

Therefore, the control unit ends the fourth operation at an appropriate timing.

In the present battery device, it is preferable that the control unit executes the specific operation when the inclination sensor is abnormal.

In addition to a case where the accumulated time exceeds the limit time, in a case where the inclination sensor is abnormal, the control unit executes the specific operation. When the inclination sensor is abnormal, it is unknown whether the storage capacity of the battery deteriorates. The specific operation is also executed when it is unknown whether the storage capacity of the battery deteriorates. Therefore, the present battery device more appropriately deals with deterioration of the storage capacity of the battery.

In the present battery device, it is preferable that the battery is attachable to and detachable from the straddled electric vehicle.

Even when the battery is attachable to and detachable from the straddled electric vehicle, the present battery device appropriately deals with deterioration of the storage capacity of the battery.

In the present battery device, it is preferable that when the battery is attached to the straddled electric vehicle and when the battery is removed from the straddled electric vehicle, the inclination sensor detects the inclination angle of the battery.

Therefore, it is easy to monitor the inclination angle of the battery when the battery is attached to the straddled electric vehicle and when the battery is removed from the straddled electric vehicle.

In the present battery device, it is preferable that when the battery is attached to the straddled electric vehicle and when the battery is removed from the straddled electric vehicle, the control unit acquires the accumulated time on the basis of the detection result of the inclination sensor.

Therefore, it is easy to monitor the accumulated time when the battery is attached to the straddled electric vehicle and when the battery is removed from the straddled electric vehicle.

In the present battery device, it is preferable that the battery is fixed to the straddled electric vehicle in a non-detachable manner from the straddled electric vehicle.

Even when the battery is fixed to the straddled electric vehicle in a non-detachable manner from the straddled electric vehicle, the present battery device appropriately deals with deterioration of the storage capacity of the battery.

In the present battery device, it is preferable that the battery device is attachable to and detachable from the straddled electric vehicle.

Even when the battery device is attachable to and detachable from the straddled electric vehicle, the present battery device appropriately deals with deterioration of the storage capacity of the battery.

In the present battery device, it is preferable that when the battery device is attached to the straddled electric vehicle and when the battery device is removed from the straddled electric vehicle, the inclination sensor detects the inclination angle of the battery.

Therefore, it is easy to monitor the inclination angle of the battery when the battery device is attached to the straddled electric vehicle and when the battery device is removed from the straddled electric vehicle.

In the present battery device, it is preferable that when the battery device is attached to the straddled electric vehicle and when the battery device is removed from the straddled electric vehicle, the control unit acquires the accumulated time on the basis of the detection result of the inclination sensor.

Therefore, it is easy to monitor the accumulated time when the battery device is attached to the straddled electric vehicle and when the battery device is removed from the straddled electric vehicle.

In the present battery device, it is preferable that the control unit is alternately switched between an activation state and a pause state when the battery device is removed from the straddled electric vehicle.

Therefore, when the battery device is removed from the straddled electric vehicle, it is easy to reduce the power consumption of the control unit. Therefore, when the battery device is removed from the straddled electric vehicle, it is easy for the control unit to monitor the accumulated time over a long period of time.

In the present battery device, it is preferable that when the battery device is removed from the straddled electric vehicle, a period during which the control unit is in the pause state is longer than a period during which the control unit is in the activation state.

Therefore, when the battery device is removed from the straddled electric vehicle, it is easier to reduce the power consumption of the control unit. Therefore, when the battery device is removed from the straddled electric vehicle, it is easier for the control unit to monitor the accumulated time over a long period of time.

In the present battery device, it is preferable that the control unit is activated at least once or more within 60 minutes when the battery device is removed from the straddled electric vehicle.

Therefore, when the battery device is removed from the straddled electric vehicle, it is easy for the control unit to monitor the inclination angle of the battery. Therefore, when the battery device is removed from the straddled electric vehicle, it is easy for the control unit to accurately acquire the accumulated time.

In the present battery device, it is preferable that the battery device is fixed to the straddled electric vehicle in a non-detachable manner from the straddled electric vehicle.

Even when the battery device is fixed to the straddled electric vehicle in a non-detachable manner from the straddled electric vehicle, the present battery device appropriately deals with deterioration of the storage capacity of the battery.

The present invention is a straddled electric vehicle including:
an electric motor propelling the straddled electric vehicle; and
a battery device, wherein
the battery device includes:
   a battery supplying electric power to the electric motor;
   an inclination sensor detecting an inclination angle of the battery; and
   a control unit acquiring an accumulated time during which the battery is in an inclined state on the basis of a detection result of the inclination sensor, and executing a specific operation on the battery when the accumulated time exceeds a limit time.

The straddled electric vehicle includes an electric motor and a battery device. The electric motor propels the straddled electric vehicle. The battery device includes a battery, an inclination sensor, and a control unit. The battery supplies electric power to the electric motor. The inclination sensor detects an inclination angle of the battery. The control unit acquires an accumulated time during which the battery is in an inclined state on the basis of a detection result of the inclination sensor. When the accumulated time exceeds the limit time, the control unit executes the specific operation.

Here, when the accumulated time exceeds the limit time, the storage capacity of the battery may deteriorate. Therefore, when the storage capacity of the battery may deteriorate, the specific operation is executed. Therefore, the battery device appropriately deals with deterioration of the storage capacity of the battery. That is, the straddled electric vehicle appropriately deals with deterioration of the storage capacity of the battery.

The present invention is a battery management method including:
a time counting step of obtaining an accumulated time during which a battery supplying electric power to an electric motor propelling a straddled electric vehicle is in an inclined state;
a time determination step of determining whether the accumulated time exceeds a limit time; and
an execution step of executing a specific operation on the battery when the accumulated time exceeds the limit time.

The electric motor propels the straddled electric vehicle. The battery supplies electric power to the electric motor. The battery management method includes a time counting step, a time determination step, and an execution step. In the time counting step, an accumulated time during which the battery is in an inclined state is acquired. In the time determination step, it is determined whether the accumulated time exceeds a limit time. In the execution step, when the accumulated time exceeds the limit time, a specific operation is executed on the battery.

Here, when the accumulated time exceeds the limit time, the storage capacity of the battery may deteriorate. Therefore, when the storage capacity of the battery may deteriorate, the specific operation is executed. Therefore, the battery management method appropriately deals with deterioration of the storage capacity of the battery.

### Advantageous Effects of Invention

The present battery device appropriately deals with deterioration of the storage capacity of the battery. The present straddled electric vehicle appropriately deals with deterioration of the storage capacity of the battery.

### Brief Description of Drawings

Fig. 1 is a left side view of a straddled electric vehicle of an embodiment.
Fig. 2 is a view illustrating a handlebar.
Fig. 3 is a block diagram of the straddled electric vehicle.
Fig. 4 is a cross-sectional view illustrating a structure of a battery.
Fig. 5 is a cross-sectional view illustrating the structure of the battery.
Fig. 6 is a plan view of the battery.
Fig. 7 is a flowchart illustrating a procedure of operation of the straddled electric vehicle and a battery device.
Fig. 8 is a flowchart illustrating a procedure of a first operation.
Fig. 9 is a diagram describing an inclination angle of a battery in a modified embodiment.
Fig. 10 is a block diagram of a straddled electric vehicle of a first modified embodiment.
Fig. 11 is a flowchart illustrating a procedure of a second operation.
Fig. 12 is a block diagram of a straddled electric vehicle of a second modified embodiment.
Fig. 13 is a flowchart illustrating a procedure of a third operation.
Fig. 14 is a block diagram of a straddled electric vehicle of a third modified embodiment.
Fig. 15 is a flowchart illustrating a procedure of a fourth operation.

### Description of Embodiments

Hereinafter, a battery device and a straddled electric vehicle according to the present invention will be described with reference to the drawings.

### <1. Schematic configuration of straddled electric vehicle 1>

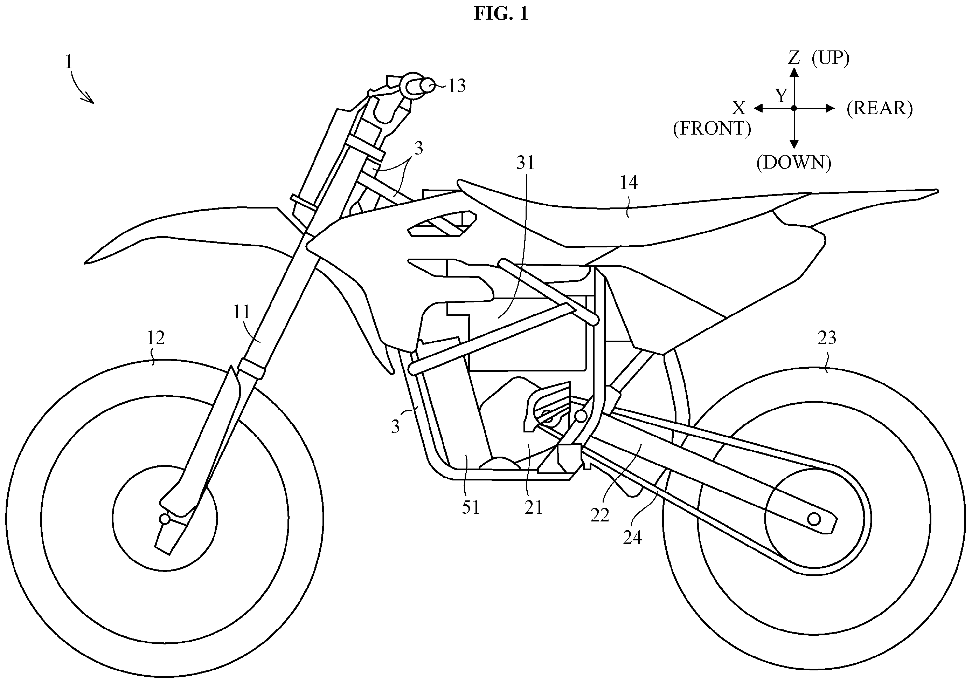

Fig. 1 is a left side view of a straddled electric vehicle 1 according to an embodiment. Fig. 1 illustrates a longitudinal direction X, a transverse direction Y, and an up-down direction Z of the straddled electric vehicle 1. The longitudinal direction X, the transverse direction Y, and the up-down direction Z are defined with reference to a driver (also referred to as a rider) mounted on the straddled electric vehicle 1. The longitudinal direction X, the transverse direction Y, and the up-down direction Z are orthogonal to each other. The longitudinal direction X and the transverse direction Y are horizontal. The up-down direction Z is vertical.

The terms "forward", "rearward", "upward", "downward", "rightward", and "leftward", respectively, mean "forward", "rearward", "upward", "downward", "rightward", and "leftward" as seen from the driver mounted on the straddled electric vehicle 1. Unless otherwise stated in this specification, "forward" and "rearward" include not only directions parallel to the longitudinal direction X but also directions close to the longitudinal direction X. The directions close to the longitudinal direction X are, for example, directions at angles of 45 degrees or less to the longitudinal direction X. Similarly, unless otherwise specified, "rightward" and "leftward" include not only directions parallel to the transverse direction Y but also directions close to the transverse direction Y. Unless otherwise specified, "upward" and "downward" include not only directions parallel to the up-down direction Z but also directions close to the up-down direction Z. For reference, the drawings show the terms FRONT, REAR, UP, DOWN, RIGHT, and LEFT, as appropriate.

The straddled electric vehicle 1 is configured to be able to lean rightward and leftward from an upright posture. For example, when the straddled electric vehicle 1 is in the upright posture, it is easy for the straddled electric vehicle 1 to move forward straight. For example, when the straddled electric vehicle 1 leans rightward or leftward from the upright posture, it is easy for the straddled electric vehicle 1 to turn rightward or leftward.

The straddled electric vehicle 1 is classified as, for example, an off-road type vehicle. The off-road type vehicle is suitable for traveling on an uneven ground, for example. The off-road type vehicle includes, for example, a motocrosser and a dual purpose vehicle. The dual purpose vehicle is also referred to as a dual-sport motorcycle.

The straddled electric vehicle 1 includes a vehicle body frame 3.

The straddled electric vehicle includes a front fork 11. The front fork 11 is supported by the vehicle body frame 3. The front fork 11 extends forward and downward from the vehicle body frame 3.

The straddled electric vehicle includes a front wheel 12. The front wheel 12 is supported by a lower part of the front fork 11.

The straddled electric vehicle 1 includes a handlebar 13. The handlebar 13 is supported by an upper part of the front fork 11.

The straddled electric vehicle 1 includes a seat 14. The seat 14 is disposed more rearward than the handlebar 13.

The straddled electric vehicle 1 includes an electric motor 21. The electric motor 21 propels the straddled electric vehicle 1. The electric motor 21 converts electric power into power for propulsion of the straddled electric vehicle 1. The electric motor 21 outputs power. The electric motor 21 is supported by the vehicle body frame 3.

The electric motor 21 is fixed to the vehicle body frame 3, for example. The electric motor 21 is non-swingable with respect to the vehicle body frame 3, for example.

The electric motor 21 is, for example, an AC motor.

The straddled electric vehicle 1 includes a swing arm 22. The swing arm 22 is supported by the vehicle body frame 3. The swing arm 22 is swingable with respect to the vehicle body frame 3. The swing arm 22 extends rearward from the vehicle body frame 3.

The straddled electric vehicle 1 includes a rear wheel 23. The rear wheel 23 is supported by a rear part of the swing arm 22.

For example, the rear wheel 23 does not overlap the electric motor 21 in side view of the straddled electric vehicle 1.

The straddled electric vehicle 1 includes a power transmission mechanism 24. The power transmission mechanism 24 transmits power from the electric motor 21 to the rear wheel 23. The power transmission mechanism 24 includes, for example, at least one of a chain, a belt, and a drive shaft.

The straddled electric vehicle 1 includes a battery device 31. The battery device 31 supplies electric power to the electric motor 21. The battery device 31 is supported by the vehicle body frame 3.

The battery device 31 is fixed to the vehicle body frame 3, for example. The battery device 31 is non-swingable with respect to the vehicle body frame 3, for example.

The straddled electric vehicle 1 includes, for example, an inverter 51. The inverter 51 is electrically connected to the battery device 31. The inverter 51 is electrically connected to the electric motor 21. The inverter 51 receives a direct current from the battery device 31. The inverter 51 converts the direct current into an alternating current. The inverter 51 supplies the alternating current to the electric motor 21.

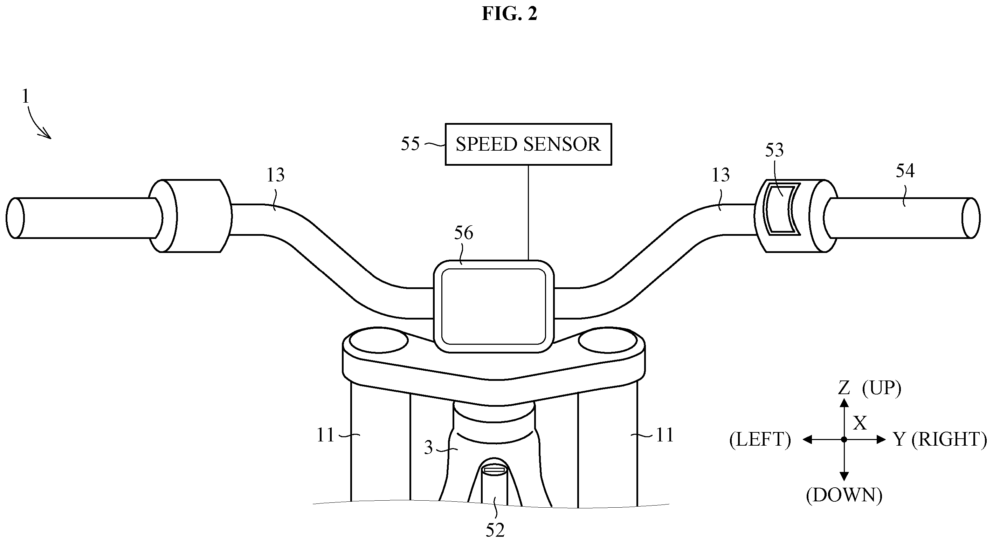

Fig. 2 is a view illustrating the handlebar 13. The straddled electric vehicle 1 includes a main switch 52. The main switch 52 is switched between an on-state and an off-state. The main switch 52 is operated by the driver.

The straddled electric vehicle 1 includes a run switch 53. The run switch 53 is also called a starter switch. The run switch 53 is switched between an on-state and an off-state. The run switch 53 is operated by the driver.

The straddled electric vehicle 1 includes an accelerator 54. The accelerator 54 is attached to the handlebar 13. The accelerator 54 is, for example, an accelerator grip. The accelerator 54 is operated by the driver.

The straddled electric vehicle 1 includes a speed sensor 55. The speed sensor 55 detects the speed of the straddled electric vehicle 1. The "speed of the straddled electric vehicle 1" is appropriately referred to as "speed SA". The speed sensor 55 is installed, for example, on at least one of the front wheel 12 and the rear wheel 23.

The straddled electric vehicle 1 includes a meter unit 56. The meter unit 56 presents information regarding the straddled electric vehicle 1 to the driver. The information regarding the straddled electric vehicle 1 is, for example, the speed SA.

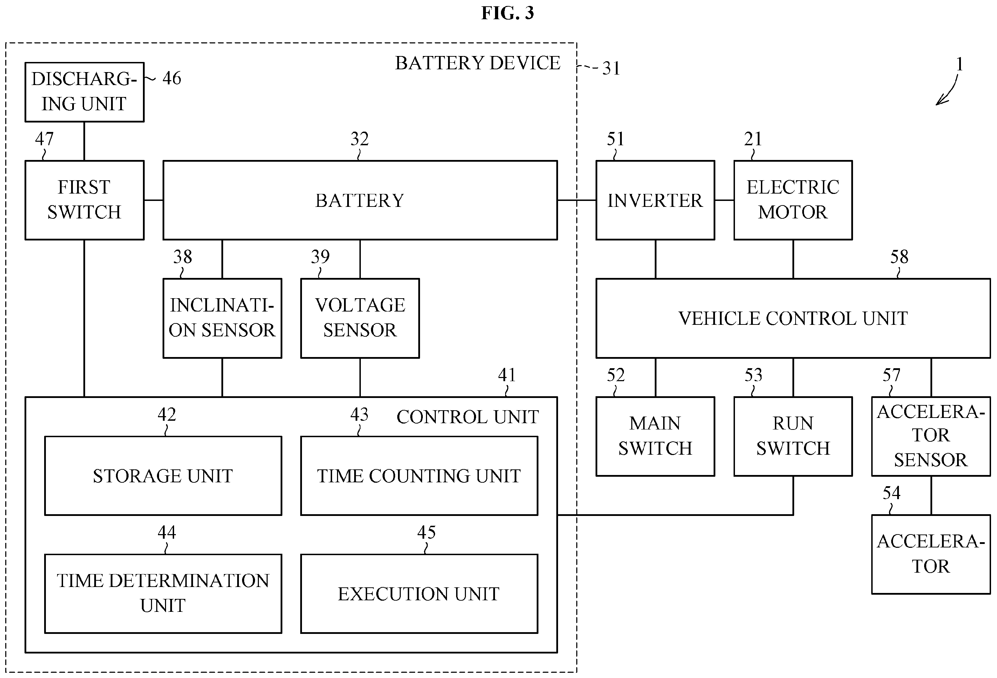

Fig. 3 is a block diagram of the straddled electric vehicle 1. The straddled electric vehicle 1 includes an accelerator sensor 57. The accelerator sensor 57 detects an operation amount of the accelerator 54.

The straddled electric vehicle 1 includes a vehicle control unit 58. The vehicle control unit 58 is electrically connected to the main switch 52. The vehicle control unit 58 acquires the state of the main switch 52. Alternatively, the main switch 52 switches the vehicle control unit 58 between a pause state and an activation state. The vehicle control unit 58 is electrically connected to the run switch 53. The vehicle control unit 58 acquires the state of the run switch 53. The vehicle control unit 58 is electrically connected to the accelerator sensor 57. The vehicle control unit 58 acquires a detection result of the accelerator sensor 57. The vehicle control unit 58 acquires an operation amount of the accelerator 54.

The vehicle control unit 58 is electrically connected to the electric motor 21. The vehicle control unit 58 controls the electric motor 21. The vehicle control unit 58 adjusts the output of the electric motor 21.

For example, the vehicle control unit 58 controls the inverter 51. The vehicle control unit 58 controls the inverter 51 to adjust the output of the electric motor 21. The vehicle control unit 58 is electrically connected to the inverter 51.

When the main switch 52 is in an off-state, the vehicle control unit 58 is in the pause state. When the vehicle control unit 58 is in the pause state, the vehicle control unit 58 does not control the electric motor 21. When the vehicle control unit 58 is in the pause state, the operation of the run switch 53 is invalid. When the vehicle control unit 58 is in the pause state, the operation of the accelerator 54 is invalid.

When the main switch 52 is in the on-state, the vehicle control unit 58 is in the activation state. When the vehicle control unit 58 is in the activation state, the operation of the run switch 53 is valid.

When the run switch 53 is in the off-state, the run switch 53 prohibits the operation of the electric motor 21. When the run switch 53 is in the off-state, the vehicle control unit 58 does not control the electric motor 21. When the run switch 53 is in the off-state, the operation of the accelerator 54 is invalid. When the run switch 53 is in the off-state, the vehicle control unit 58 does not operate the electric motor 21 regardless of the operation of the accelerator 54.

When the run switch 53 is in the on-state, the run switch 53 allows the operation of the electric motor 21. When the run switch 53 is in the on-state, the operation of the accelerator 54 is valid. When the run switch 53 is in the on-state, the vehicle control unit 58 operates the electric motor 21 according to the operation of the accelerator 54. When the run switch 53 is in the on-state, the vehicle control unit 58 adjusts the output of the electric motor 21 according to the operation amount of the accelerator 54.

As described above, the vehicle control unit 58 controls the electric motor 21 on the basis of the state of the run switch 53 and the detection result of the accelerator sensor 57.

The vehicle control unit 58 includes, for example, a processor and a memory (not illustrated). The vehicle control unit 58 may be configured by, for example, an electronic control unit (ECU) (not illustrated).

### <2. Configuration of battery device 31>

The battery device 31 includes a battery 32. The battery 32 supplies electric power to the electric motor 21. The battery 32 is electrically connected to the electric motor 21.

For example, the battery 32 supplies electric power to the electric motor 21 via the inverter 51. The battery 32 is electrically connected to the inverter 51.

The output voltage of the battery 32 is, for example, higher than 12 V. The output voltage of the battery 32 is, for example, 60 V.

The battery 32 is, for example, a lithium ion battery.

The battery 32 is fixed to the vehicle body frame 3, for example. The battery 32 is non-swingable with respect to the vehicle body frame 3, for example.

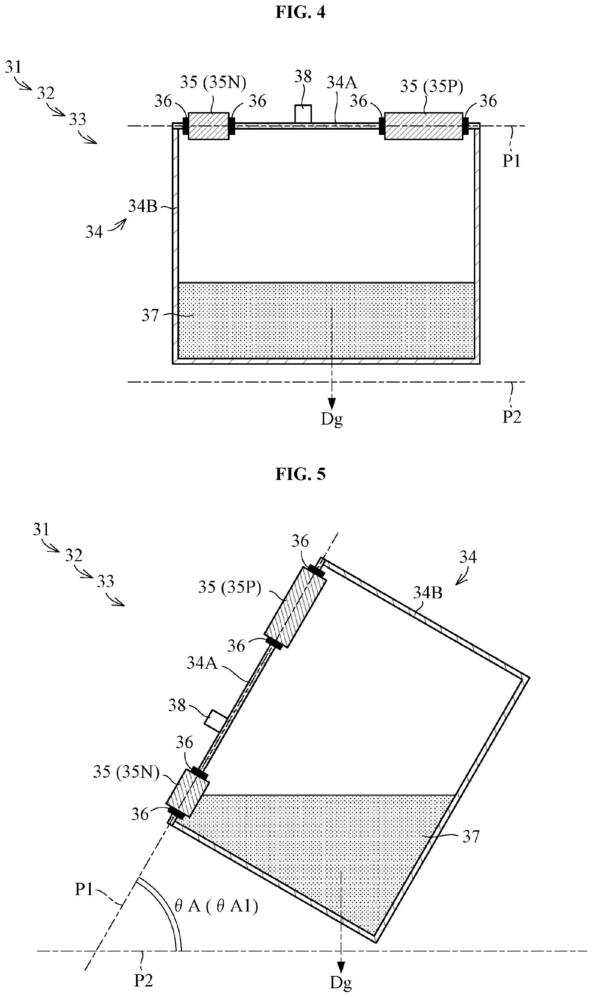

Fig. 4 is a cross-sectional view illustrating the structure of the battery 32. In Fig. 4, the battery 32 is not in the inclined state. In Fig. 4, the battery 32 is in a correct posture.

For example, when the straddled electric vehicle 1 is in the upright posture, the battery 32 is in the correct posture. When the battery 32 is removed from the straddled electric vehicle 1, the posture of the battery 32 does not depend on the posture of the straddled electric vehicle 1. For this reason, when the battery 32 is removed from the straddled electric vehicle 1, the battery 32 may be in the correct posture.

The battery 32 includes a cell 33. The number of cells 33 included in the battery 32 may be one or more. Each cell 33 has a substantially common structure.

The cell 33 includes a case 34. The case 34 has an inside. The inside of the case 34 is a space. The case 34 seals the inside of the case 34. The case 34 separates the inside of the case 34 from the outside of the case 34.

The case 34 has, for example, a rectangular outer shape. The case 34 has, for example, a box-shaped outer shape.

More specifically, the case 34 includes a top plate 34A. The top plate 34A is an upper part of the case 34. When the battery 32 is in the correct posture, the top plate 34A is located at the upper part of the case 34.

The top plate 34A has a plate shape. The top plate 34A is substantially flat.

When the battery 32 is in the correct posture, the top plate 34A extends in the horizontal direction.

The case 34 includes a case body 34B. The case body 34B has a box-like outer shape.

The top plate 34A is attached to the case body 34B. The top plate 34A is attached to an upper part of the case body 34B.

The cell 33 includes a terminal 35. The terminal 35 is attached to the case 34 via an insulator 36. The case 34 and the terminal 35 are electrically insulated by the insulator 36.

The terminal 35 is attached to the top plate 34A via the insulator 36. The top plate 34A and the terminal 35 are electrically insulated by the insulator 36.

The terminal 35 is located at the upper part of the case 34. When the battery 32 is in the correct posture, the terminal 35 is located at the upper part of the case 34.

The terminal 35 penetrates the case 34. The terminal 35 is inserted into the case 34 from the outside of the case 34.

The terminal 35 penetrates the top plate 34A. The terminal 35 is inserted into the case 34 from the outside of the case 34 through the top plate 34A.

The terminal 35 includes a negative electrode terminal 35N. The negative electrode terminal 35N penetrates the case 34. The negative electrode terminal 35N is inserted into the case 34 from the outside of the case 34.

The terminal 35 includes a positive electrode terminal 35P. The positive electrode terminal 35P penetrates the case 34. The positive electrode terminal 35P is inserted into the case 34 from the outside of the case 34.

The terminal 35 is made of a material different from the material of the case 34. At least a part of the terminal 35 is made of a material different from the material of the case 34. At least one of the negative electrode terminal 35N and the positive electrode terminal 35P is made of a material different from the material of the case 34. For example, at least a part of the negative electrode terminal 35N is made of a material different from the material of the case 34.

The terminal 35 is made of a material different from the material of the top plate 34A. At least a part of the terminal 35 is made of a material different from the material of the top plate 34A. At least one of the negative electrode terminal 35N and the positive electrode terminal 35P is made of a material different from the material of the top plate 34A. For example, at least a part of the negative electrode terminal 35N is made of a material different from the material of the top plate 34A.

The case 34 is made of, for example, aluminum.

The top plate 34A is made of, for example, aluminum.

The case body 34B is made of, for example, aluminum.

The negative electrode terminal 35N is made of, for example, copper. At least a part of the negative electrode terminal 35N is made of copper. For example, the entirety of the negative electrode terminal 35N is made of copper.

The positive electrode terminal 35P is made of, for example, aluminum.

The positive electrode terminal 35P has, for example, a size larger than that of the negative electrode terminal 35N.

The cell 33 includes an electrolytic solution 37. The electrolytic solution 37 is stored inside the case 34.

The case 34 and the electrolytic solution 37 are electrically connected. The electrolytic solution 37 is in direct contact with the case 34. The electrolytic solution 37 is in direct contact with an inner surface of the case 34. The electrolytic solution 37 is in direct contact with aluminum constituting the case 34.

The battery 32 does not include an insulating member that separates the case 34 from the electrolytic solution 37. The inner surface of the case 34 is not covered with an insulating film.

The electrolytic solution 37 is, for example, a non-aqueous electrolyte. The electrolytic solution 37 contains, for example, lithium hexafluorophosphate.

The electrolytic solution 37 is located at a lower part of the case 34. When the battery 32 is in the correct posture, the electrolytic solution 37 is located at the lower part of the case 34.

The electrolytic solution 37 is not in direct contact with the terminal 35. When the battery 32 is in the correct posture, the electrolytic solution 37 is not in direct contact with the terminal 35. When the battery 32 is in the correct posture, the entirety of the terminal 35 is located higher than the entirety of the electrolytic solution 37. When the battery 32 is in the correct posture, the terminal 35 and the case 34 are not electrically connected through the electrolytic solution 37.

The cell 33 further includes a negative electrode, a positive electrode, and a separator (not illustrated). The negative electrode, the positive electrode, and the separator are installed inside the case 34. The negative electrode is electrically connected to the negative electrode terminal 35N. The positive electrode is electrically connected to the positive electrode terminal 35P. The separator is disposed between the negative electrode and the positive electrode. The electrolytic solution 37, the negative electrode, the positive electrode, and the separator are factors of the storage capacity of the battery 32.

Fig. 5 is a cross-sectional view illustrating the structure of the battery 32. In Fig. 5, the battery 32 is in the inclined state. In Fig. 5, the battery 32 is not in the correct posture.

For example, when the straddled electric vehicle 1 leans rightward or leftward from the upright posture, for example, the battery 32 may be in the inclined state. When the battery 32 is removed from the straddled electric vehicle 1, the battery 32 may be in the inclined state.

When the battery 32 is inclined, the electrolytic solution 37 moves inside the case 34. The position of the electrolytic solution 37 in the case 34 changes according to a direction Dg of gravity.

When the battery 32 is in the inclined state, at least a part of the terminal 35 is located at the lower part of the case 34. Therefore, when the battery 32 is in the inclined state, the electrolytic solution 37 may be in direct contact with the terminal 35. When the battery 32 is in the inclined state, the electrolytic solution 37 may be in direct contact with at least one of the negative electrode terminal 35N and the positive electrode terminal 35P.

When the battery 32 is in the inclined state, the electrolytic solution 37 may be electrically connected to the terminal 35. When the battery 32 is in the inclined state, the electrolytic solution 37 may be electrically connected to at least one of the negative electrode terminal 35N and the positive electrode terminal 35P.

As a result, the case 34 may be electrically connected to the terminal 35 through the electrolytic solution 37. The case 34 may be electrically connected to at least one of the negative electrode terminal 35N and the positive electrode terminal 35P through the electrolytic solution 37. For example, aluminum constituting the case 34 may be electrically connected to copper constituting the negative electrode terminal 35N through the electrolytic solution 37.

When the case 34 and the terminal 35 are electrically connected for a long time, the storage capacity of the battery 32 may deteriorate.

For example, when the case 34 and the terminal 35 are electrically connected for a long time, the case 34 may corrode. The corrosion of the case 34 may form a through hole in the case 34. The inside of the case 34 communicates with the outside of the case 34 through the through hole. Air outside the case 34 may enter the inside of the case 34 through the through hole and come into contact with at least one of the electrolytic solution 37, the negative electrode, the positive electrode, and the separator.

For example, when the case 34 and the terminal 35 are electrically connected, the electrolytic solution 37 may chemically change.

For example, when the case 34 and the terminal 35 are electrically connected for a long time, at least one of the negative electrode, the positive electrode, and the separator may deteriorate. For example, at least one of the negative electrode, the positive electrode, and the separator may be damaged or dissolved.

The battery device 31 includes an inclination sensor 38.

The inclination sensor 38 is installed in at least one cell 33. The number of inclination sensors 38 included in the battery device 31 may be one or more. The number of inclination sensors 38 included in the battery device 31 may be the same as the number of cells 33 included in the battery device 31, or may be different from the number of cells 33 included in the battery device 31.

The inclination sensor 38 is attached to the battery 32.

For example, the inclination sensor 38 is disposed on the upper part of the battery 32. When the battery 32 is in the correct posture, the inclination sensor 38 is located at the upper part of the battery 32.

For example, the inclination sensor 38 is disposed on the upper part of the cell 33. When the battery 32 is in the correct posture, the inclination sensor 38 is located at the upper part of the cell 33.

For example, the inclination sensor 38 is disposed outside the case 34.

For example, the inclination sensor 38 is disposed on the upper part of the case 34. When the battery 32 is in the correct posture, the inclination sensor 38 is located at the upper part of the case 34.

For example, the inclination sensor 38 is attached to the case 34.

For example, the inclination sensor 38 is attached to the top plate 34A.

The inclination sensor 38 is disposed, for example, between the negative electrode terminal 35N and the positive electrode terminal 35P.

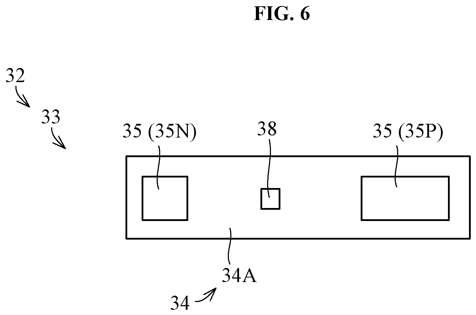

Fig. 6 is a plan view of the battery 32. For example, the inclination sensor 38 is disposed between the negative electrode terminal 35N and the positive electrode terminal 35P in plan view of the battery 32. The negative electrode terminal 35N, the positive electrode terminal 35P, and the inclination sensor 38 are arranged in a line in plan view of the battery 32. The negative electrode terminal 35N, the inclination sensor 38, and the positive electrode terminal 35P are arranged in this order in plan view of the battery 32. Here, "in plan view of the battery 32" has the same meaning as "viewed from the direction perpendicular to the top plate 34A".

Refer to Figs. 4 and 5. The inclination sensor 38 detects an inclination angle θA of the battery 32.

For example, in Fig. 4, the inclination angle θA of the battery 32 is, for example, 0 degrees. Note that Fig. 4 does not explicitly show the inclination angle θA. For example, when the battery 32 is in the correct posture, the inclination angle θA is 0 degrees. For example, when the straddled electric vehicle 1 is in the upright posture, the inclination angle θA is 0 degrees.

The inclination angle θA of the battery 32 illustrated in Fig. 5 is larger than the inclination angle θA of the battery 32 illustrated in Fig. 4. The inclination angle θA of the battery 32 in the inclined state is larger than the inclination angle θA of the battery 32 in the correct posture. For example, in Fig. 5, the inclination angle θA of the battery 32 is 60 degrees.

Strictly speaking, the inclination angle θA is appropriately defined. An example of the definition of the inclination angle θA will be described.

The inclination angle θA is, for example, a first inclination angle θA1. The inclination angle θA illustrated in Fig. 5 is the first inclination angle θA1. The first inclination angle θA1 is defined in consideration of gravity. Specifically, the first inclination angle θA1 is an angle between a first imaginary plane P1 and a second imaginary plane P2. The first imaginary plane P1 and the second imaginary plane P2 are imaginary planes. The first imaginary plane P1 is parallel to the top plate 34A. The second imaginary plane P2 is perpendicular to the direction Dg of gravity.

When the top plate 34A is horizontal, the top plate 34A is perpendicular to the direction Dg of gravity. Therefore, when the top plate 34A is horizontal, the first imaginary plane P1 and the second imaginary plane P2 are parallel to each other. Thus, when the top plate 34A is horizontal, the first inclination angle θA1 is 0 degrees.

When the top plate 34A is vertical, the top plate 34A is parallel to the direction Dg of gravity. Therefore, when the top plate 34A is vertical, the first imaginary plane P1 and the second imaginary plane P2 are orthogonal to each other. Thus, when the top plate 34A is vertical, the first inclination angle θA1 is 90 degrees.

For example, the inclination sensor 38 detects the first inclination angle θA1 as the inclination angle θA.

The inclination sensor 38 includes at least one of a gyro sensor, an acceleration sensor, and an inertial measurement device.

Refer to Fig. 3. The battery device 31 includes a voltage sensor 39. The voltage sensor 39 detects a voltage VA of the battery 32.

The voltage VA is also referred to as an output voltage of the battery 32. The voltage VA is, for example, a voltage between terminals of the battery 32. The voltage between the terminals of the battery 32 is a voltage between the negative electrode terminal 35N and the positive electrode terminal 35P.

The battery device 31 includes a control unit 41. The control unit 41 is electrically connected to the inclination sensor 38. The control unit 41 acquires a detection result of the inclination sensor 38. The control unit 41 acquires the inclination angle θA. For example, the control unit 41 acquires the first inclination angle θA1.

The control unit 41 is electrically connected to the voltage sensor 39. The control unit 41 acquires a detection result of the voltage sensor 39. The control unit 41 acquires the voltage VA.

The control unit 41 is electrically connected to the run switch 53. The control unit 41 acquires the state of the run switch 53.

The control unit 41 acquires an accumulated time TA during which the battery 32 is in an inclined state on the basis of a detection result of the inclination sensor 38.

The inclined state of the battery 32 is defined by the inclination angle θA. For example, the inclined state is defined as a state of the battery 32 when the inclination angle θA is equal to or greater than a reference angle θB. When the inclination angle θA is equal to or greater than the reference angle θB, the battery 32 is in the inclined state. When the inclination angle θA is less than the reference angle θB, the battery 32 is not in the inclined state.

For example, the inclined state of the battery 32 is defined by the first inclination angle θA1. For example, the inclined state of the battery 32 is the state of the battery 32 when the first inclination angle θA1 is equal to or greater than the reference angle θB.

For example, in Fig. 4, the battery 32 is not in the inclined state. In Fig. 4, the inclination angle θA of the battery 32 is smaller than the reference angle θB.

For example, in Fig. 5, the battery 32 is in the inclined state. In Fig. 5, the inclination angle θA of the battery 32 is equal to or greater than the reference angle θB.

The time during which the battery 32 is in the inclined state is appropriately referred to as "inclination period L". The inclination period L is, for example, a period during which the inclination angle θA is equal to or greater than the reference angle θB.

For example, the inclination period L is a period during which the first inclination angle θA1 is equal to or greater than the reference angle θB.

The accumulated time TA is a value obtained by integrating the inclination period L. The accumulated time TA is the sum of the inclination periods L.

The control unit 41 measures the inclination period L on the basis of the detection result of the inclination sensor 38 and integrates the inclination period L to obtain the accumulated time TA.

The control unit 41 monitors the accumulated time TA.

When the accumulated time TA is equal to or less than a limit time TB, there is substantially no possibility that the storage capacity of the battery 32 deteriorates. When the accumulated time TA exceeds the limit time TB, the storage capacity of the battery 32 may deteriorate.

Therefore, when the accumulated time TA exceeds the limit time TB, the control unit 41 executes a specific operation on the battery 32.

Refer to Fig. 3. The detailed configuration of the control unit 41 will be described.

The control unit 41 includes a storage unit 42. The storage unit 42 stores the limit time TB. The storage unit 42 stores the reference angle θB.

The control unit 41 includes a time counting unit 43. The time counting unit 43 measures the inclination period L on the basis of the detection result of the inclination sensor 38. More specifically, the time counting unit 43 measures the inclination period L on the basis of the reference angle θB stored in the storage unit 42 and the inclination angle θA detected by the inclination sensor 38. Furthermore, the time counting unit 43 integrates the inclination period L to obtain the accumulated time TA.

The control unit 41 includes a time determination unit 44. The time determination unit 44 compares the limit time TB stored in the storage unit 42 and the accumulated time TA obtained by the time counting unit 43. The time determination unit 44 determines whether the accumulated time TA exceeds the limit time TB.

The control unit 41 includes an execution unit 45. When the time determination unit 44 determines that the accumulated time TA exceeds the limit time TB, the execution unit 45 executes the specific operation.

The reference angle θB will be described. The reference angle θB is set in advance.

The reference angle θB is, for example, a constant.

The reference angle θB is, for example, 60 degrees.

The limit time TB will be described. The limit time TB is set in advance.

The limit time TB is, for example, shorter than a minimum value of the accumulated time TA required for deterioration of the storage capacity of the battery 32. The minimum value of the accumulated time TA required for deterioration of the storage capacity of the battery 32 is acquired by at least one of experiment and simulation.

The limit time TB is set on the basis of, for example, the relationship between the accumulated time TA and the storage capacity of the battery. The relationship between the accumulated time TA and the storage capacity of the battery is acquired by at least one of experiment and simulation.

The limit time TB is, for example, a constant.

The limit time TB does not depend on, for example, the inclination angle θA of the battery 32 in the inclined state. The limit time TB does not depend on, for example, the inclination angle θA in the inclination period L.

The limit time TB is, for example, 1 year or more.

The limit time TB is, for example, 1 year.

The limit time TB is, for example, longer than 1 year. The limit time TB is, for example, 2 years.

The limit time TB is, for example, longer than 2 years. The limit time TB is, for example, 3 years.

The control unit 41 includes, for example, a processor and a memory. The memory includes a read-only memory (ROM), a random access memory (RAM), and a storage medium. The ROM stores various programs. The program stored in the ROM includes, for example, a battery management program. The storage medium stores the limit time TB and the reference angle θB. The processor is, for example, a central processing unit (CPU). The processor performs arithmetic processing. The processor executes the program stored in the ROM. For example, the processor executes a battery management program. For example, the processor executes the battery management program using the limit time TB and the reference angle θB stored in the storage medium. The RAM temporarily stores various types of information. The RAM is used as a work area of the processor. As a result, the processor and the memory implement the functions of the control unit 41. For example, the processor and the memory implement the functions of the storage unit 42, the time counting unit 43, the time determination unit 44, and the execution unit 45.

The battery device 31 includes a discharging unit 46. The discharging unit 46 is for discharging the battery 32.

For example, the discharging unit 46 is a resistor.

The battery device 31 includes a first switch 47. The first switch 47 electrically connects and disconnects the battery 32 and the discharging unit 46. For example, the first switch 47 opens and closes an electric circuit between the battery 32 and the discharging unit 46. The first switch 47 is controlled by the control unit 41.

### <3. Operation example>

An operation example of the straddled electric vehicle 1 will be described.

Refer to Figs. 1, 2, and 3. The driver sits on the seat 14 and grips the handlebar 13. The driver changes the main switch 52 from the off-state to the on-state. The driver changes the run switch 53 from the off-state to the on-state. The driver operates the accelerator 54.

The accelerator sensor 57 detects an operation amount of the accelerator 54. The vehicle control unit 58 acquires an operation amount of the accelerator 54 from the accelerator sensor 57. The vehicle control unit 58 controls the electric motor 21 on the basis of the operation amount of the accelerator 54. The electric motor 21 drives the rear wheel 23 using the electric power of the battery 32. The straddled electric vehicle 1 start moving.

When the straddled electric vehicle 1 travels, the vehicle body frame 3 may lean rightward or leftward from the upright posture. The battery device 31 is inclined integrally with the vehicle body frame 3. The battery 32 is inclined integrally with the vehicle body frame 3. Therefore, when the straddled electric vehicle 1 travels, the battery 32 may be temporarily in the inclined state.

When the straddled electric vehicle 1 is parked or stopped, the battery 32 may not be in the inclined state, or the battery 32 may be in the inclined state. For example, when the straddled electric vehicle 1 is stopped in the upright posture, the battery 32 is not in the inclined state. For example, when the straddled electric vehicle 1 is stopped in a lying posture, the battery 32 is in the inclined state.

An operation example of the battery device 31 will be described.

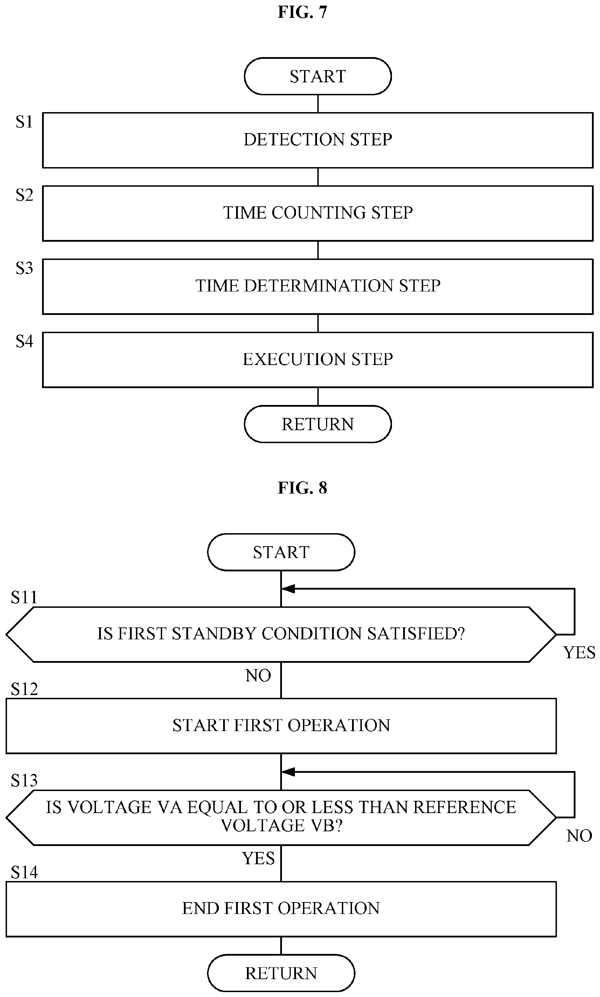

Fig. 7 is a flowchart illustrating a procedure of operation of the battery device 31. The operation example of the battery device 31 includes a detection step, a time counting step, a time determination step, and an execution step. The operation example of the battery device 31 is executed by the control unit 41 executing the battery management program. At least a part of the present operation example is an example of a battery management method of the present invention.

### Step S1: Detection step

The inclination sensor 38 detects the inclination angle θA.

### Step S2: Time counting step

The control unit 41 obtains the accumulated time TA.

### Step S3: Time determination step

The control unit 41 determines whether the accumulated time TA exceeds the limit time TB.

When the accumulated time TA is equal to or less than the limit time TB, the time determination step is executed again. The time determination step is repeated until the accumulated time TA exceeds the limit time TB. When the accumulated time TA exceeds the limit time TB, the process shifts from the time determination step to the execution step.

### Step S4: Execution step

When the accumulated time TA exceeds the limit time TB, the control unit 41 executes the specific operation on the battery 32.

The specific operation includes, for example, a first operation. In the first operation, the battery 32 is discharged through the discharging unit 46.

Refer to Figs. 3 and 8. Fig. 8 is a flowchart illustrating a procedure of the first operation.

### Step S11

The control unit 41 determines whether a first standby condition is satisfied. The first standby condition is that the operation of the electric motor 21 according to the operation of the accelerator 54 is allowed.

The first standby condition is, for example, that the run switch 53 is in the on-state. The control unit 41 determines whether the first standby condition is satisfied on the basis of the state of the run switch 53.

When the first standby condition is not satisfied, the process proceeds from step S11 to step S12.

When the first standby condition is satisfied, step S11 is executed again. Step S11 is repeated until the first standby condition is no longer satisfied. When the first standby condition is no longer satisfied, the process proceeds from step S11 to step S12.

### Step S12

The control unit 41 starts the first operation. In the first operation, the control unit 41 discharges the battery 32 through the discharging unit 46. The control unit 41 electrically connects the battery 32 to the discharging unit 46. For example, the control unit 41 controls the first switch 47 to electrically connect the battery 32 and the discharging unit 46.

In the first operation, the remaining capacity of the battery 32 decreases.

### Step S13

The control unit 41 determines whether the voltage VA is equal to or less than a reference voltage VB.

The reference voltage VB is set in advance.

The reference voltage VB is equal to, for example, the end-of -discharge voltage.

The reference voltage VB is stored in the storage unit 42, for example. The control unit 41 acquires the voltage VA of the battery 32 on the basis of the detection result of the voltage sensor 39. The control unit 41 compares the voltage VA detected by the voltage sensor 39 and the reference voltage VB stored in the storage unit 42. Thereby, the control unit 41 determines whether the voltage VA is equal to or less than a reference voltage VB.

When the voltage VA is higher than the reference voltage VB, step S13 is executed again. Step S13 is repeated until the voltage VA is equal to or less than the reference voltage VB. When the voltage VA is equal to or less than the reference voltage VB, the process proceeds from step S13 to step S14.

### Step S14

The control unit 41 ends the first operation. When the control unit 41 ends the first operation, the control unit 41 electrically disconnects the battery 32 from the discharging unit 46. When the control unit 41 ends the first operation, the control unit 41 controls the first switch 47 to electrically disconnect the battery 32 from the discharging unit 46.

As described above, the procedure of the first operation includes step S11. Therefore, in a case where the first standby condition is not satisfied when the accumulated time TA exceeds the limit time TB, the control unit 41 starts the first operation. For example, in a case where the run switch is in the off-state when the accumulated time TA exceeds the limit time TB, the control unit 41 starts the first operation.

In a case where the first standby condition is satisfied when the accumulated time TA exceeds the limit time TB, the control unit 41 waits for start of the first operation. For example, in a case where the run switch is in the on-state when the accumulated time TA exceeds the limit time TB, the control unit 41 waits for start of the first operation.

The control unit 41 waits for start of the first operation until the first standby condition is no longer satisfied. For example, the control unit 41 waits for start of the first operation until the run switch is switched to the off-state.

When the first standby condition is no longer satisfied, the control unit 41 starts the first operation. For example, when the run switch is switched to the off-state, the control unit 41 starts the first operation.

The procedure of the first operation includes step S13. The control unit 41 ends the first operation on the basis of the detection result of the voltage sensor 39. When the voltage VA is higher than the reference voltage VB, the control unit 41 continues the first operation. When the voltage VA is equal to or less than the reference voltage VB, the control unit 41 ends the first operation.

### <4. Effects of embodiment>

The battery device 31 includes the battery 32, the inclination sensor 38, and the control unit 41. The battery 32 supplies electric power to the electric motor 21. The electric motor 21 propels the straddled electric vehicle 1. The inclination sensor 38 detects an inclination angle θA of the battery 32. The control unit 41 acquires the accumulated time TA during which the battery 32 is in the inclined state on the basis of the detection result of the inclination sensor 38. When the accumulated time TA exceeds the limit time TB, the control unit 41 executes the specific operation on the battery 32.

Here, when the accumulated time TA exceeds the limit time TB, the storage capacity of the battery 32 may deteriorate. Therefore, when the storage capacity of the battery 32 may deteriorate, the specific operation is executed. Therefore, when the storage capacity of the battery 32 may deteriorate, the battery device 31 takes appropriate action to the battery 32. Therefore, the battery device 31 appropriately deals with deterioration of the storage capacity of the battery 32.

The accumulated time TA is a value obtained by integrating the inclination period L. The inclination period L is a period during which the battery 32 is in the inclined state. Therefore, it is easy to obtain the accumulated time TA.

The control unit 41 measures the inclination period L on the basis of the detection result of the inclination sensor 38 and integrates the inclination period L to obtain the accumulated time TA. Therefore, it is easy for the control unit 41 to acquire the accumulated time TA.

The control unit 41 includes the storage unit 42, the time counting unit 43, the time determination unit 44, and the execution unit 45. The storage unit 42 stores the limit time TB. The time counting unit 43 measures the inclination period L on the basis of the detection result of the inclination sensor 38. The time counting unit 43 integrates the inclination period L to obtain the accumulated time TA. The time determination unit 44 compares the limit time TB stored in the storage unit 42 and the accumulated time TA obtained by the time counting unit 43. The time determination unit 44 determines whether the accumulated time TA exceeds the limit time TB. When the time determination unit 44 determines that the accumulated time TA exceeds the limit time TB, the execution unit 45 executes the specific operation. Therefore, it is easy for the control unit 41 to acquire the accumulated time TA on the basis of the detection result of the inclination sensor 38. It is easy for the control unit 41 to execute the specific operation when the accumulated time TA exceeds the limit time TB.

The inclined state of the battery 32 is defined by the inclination angle θA of the battery 32. Therefore, it is easy to determine whether the battery 32 is in the inclined state. Thus, it is easy to measure the inclination period L. Therefore, it is easy to acquire the accumulated time TA.

The inclined state is defined as a state of the battery 32 when the inclination angle θA of the battery 32 is equal to or greater than the reference angle θB. Therefore, it is easier to determine whether the battery 32 is in the inclined state.

The inclination period L is a period during which the inclination angle θA of the battery 32 is equal to or greater than the reference angle θB. Therefore, it is easier to measure the inclination period L. Thus, it is easy to acquire the accumulated time TA.

The storage unit 42 stores the reference angle θB. The time counting unit 43 measures the inclination period L on the basis of the reference angle θB stored in the storage unit 42 and the inclination angle θA of the battery 32 detected by the inclination sensor 38. Therefore, it is easy for the time counting unit 43 to measure the inclination period L. Furthermore, it is easy for the time counting unit 43 to obtain the accumulated time TA.

The limit time TB is shorter than the minimum value of the accumulated time TA required for deterioration of the storage capacity of the battery 32. Therefore, when the specific operation is executed, the storage capacity of the battery 32 has not yet deteriorated. Before the storage capacity of the battery 32 deteriorates, the specific operation is executed. Therefore, the battery device 31 deals with deterioration of the storage capacity of the battery 32 at an appropriate timing.

The limit time TB is set on the basis of the relationship between the accumulated time TA and the storage capacity of the battery 32. Therefore, the limit time TB is appropriately set.

The limit time TB is 1 year or more. Therefore, the limit time TB is long. Thus, the accumulated time TA is monitored over a long period of time. Therefore, the battery device 31 appropriately deals with deterioration of the storage capacity of the battery 32.

The limit time TB is a constant. Therefore, it is easy to specify the timing at which the accumulated time TA exceeds the limit time TB.

The battery 32 includes the case 34, the terminal 35, and the electrolytic solution 37. The terminal 35 is attached to the case 34 via an insulator 36. The electrolytic solution 37 is stored inside the case 34. The terminal 35 penetrates the case 34 and is inserted into the case 34 from outside the case 34. The case 34 and the electrolytic solution 37 are electrically connected. The battery 32 has the above-described configuration. Therefore, when the battery 32 is inclined, the terminal 35 and the electrolytic solution 37 may be electrically connected. Thus, when the battery 32 is inclined, the terminal 35 and the case 34 may be electrically connected through the electrolytic solution 37. When the terminal 35 and the case 34 are electrically connected, the storage capacity of the battery 32 may deteriorate. However, even when the battery 32 has the above-described configuration, the battery device 31 appropriately deals with deterioration of the storage capacity of the battery 32. Rather, when the battery 32 has the above-described configuration, the battery device 31 exhibits a remarkable effect.

The case 34 is in direct contact with the electrolytic solution 37. Therefore, when the battery 32 is inclined, the terminal 35 and the case 34 may be electrically connected through the electrolytic solution 37. Thus, the storage capacity of the battery 32 may deteriorate. However, even when the case 34 is in direct contact with the electrolytic solution 37, the battery device 31 appropriately deals with deterioration of the storage capacity of the battery 32.

The case 34 is made of aluminum. The terminal 35 includes a negative electrode terminal 35N. The negative electrode terminal 35N is made of copper. The battery 32 has the above-described configuration. Therefore, the case 34 and the negative electrode terminal 35N may be electrically connected through the electrolytic solution 37. When the case 34 and the negative electrode terminal 35N are electrically connected through the electrolytic solution 37, aluminum constituting the case 34 and copper constituting the negative electrode terminal 35N are electrically connected through the electrolytic solution 37. When aluminum of the case 34 and copper of the negative electrode terminal 35N are electrically connected through the electrolytic solution 37, the storage capacity of the battery 32 easily deteriorates. However, even when the battery 32 has the above-described configuration, the battery device 31 appropriately deals with deterioration of the storage capacity of the battery 32. Rather, when the battery 32 has the above-described configuration, the battery device 31 exhibits a remarkable effect.

The case 34 includes the top plate 34A. The top plate 34A is an upper part of the case 34. The terminal 35 penetrates the top plate 34A. The terminal 35 is inserted into the case 34 from outside the case 34. The top plate 34A and the terminal 35 are electrically insulated by the insulator 36. The battery 32 has the above-described configuration. Therefore, when the battery 32 is inclined, the terminal 35 and the case 34 may be electrically connected through the electrolytic solution 37. Thus, the storage capacity of the battery 32 may deteriorate. However, even when the battery 32 has the above-described configuration, the battery device 31 appropriately deals with deterioration of the storage capacity of the battery 32.

The inclination angle θA of the battery 32 is the first inclination angle θA1. The first inclination angle θA1 is an angle between the first imaginary plane P1 and the second imaginary plane P2. Therefore, the first inclination angle θA1 is correlated with the positional relationship between the terminal 35 and the electrolytic solution 37. Thus, the first inclination angle θA1 is suitable as the inclination angle θA of the battery 32 for defining the inclined state of the battery 32.

The inclination sensor 38 is attached to the battery 32. Therefore, it is easy for the inclination sensor 38 to detect the inclination angle θA of the battery 32.

The specific operation includes the first operation. In the first operation, the battery 32 is discharged through the discharging unit 46. Therefore, it is easy to reduce the remaining capacity of the battery 32. Thus, it is difficult for the battery 32 to discharge after the first operation. Therefore, the first operation appropriately deals with deterioration of the storage capacity of the battery 32.

When the first operation is executed, the control unit 41 electrically connects the battery 32 and the discharging unit 46. Therefore, it is easy to discharge the battery 32 through the discharging unit 46 in the first operation.

The battery device 31 includes a first switch 47. The first switch 47 electrically connects and disconnects the battery 32 and the discharging unit 46. In the first operation, the control unit 41 causes the first switch 47 to electrically connect the battery 32 and the discharging unit 46. Therefore, it is easy for the control unit 41 to electrically connect the battery 32 to the discharging unit 46 in the first operation.

The discharging unit 46 is a resistor. Therefore, it is easy for the discharging unit 46 to consume the remaining capacity of the battery 32.

In a case where the first standby condition is satisfied when the accumulated time TA exceeds the limit time TB, the control unit 41 waits for start of the first operation. The first standby condition is that the operation of the electric motor 21 according to the operation of the accelerator 54 of the straddled electric vehicle 1 is allowed. In a case where the first standby condition is satisfied when the accumulated time TA exceeds the limit time TB, the control unit 41 does not discharge the battery 32 through the discharging unit 46. Therefore, in a case where the first standby condition is satisfied when the accumulated time TA exceeds the limit time TB, the control unit 41 allows the battery 32 to supply sufficient electric power to the electric motor 21. Thus, in a case where the first standby condition is satisfied when the accumulated time TA exceeds the limit time TB, the electric motor 21 operates smoothly according to the operation of the accelerator 54. Therefore, in a case where the first standby condition is satisfied when the accumulated time TA exceeds the limit time TB, it is easy for the driver of the straddled electric vehicle 1 to drive the electric motor 21 by operating the accelerator 54.

The control unit 41 waits for start of the first operation until the first standby condition is no longer satisfied. Therefore, the battery device 31 does not hinder the smooth operation of the electric motor 21 according to the operation of the accelerator 54.

When the first standby condition is no longer satisfied, the control unit 41 starts the first operation. Therefore, the control unit 41 starts the first operation at an appropriate timing.

When the voltage VA of the battery 32 is equal to or less than the reference voltage VB, the control unit 41 ends the first operation. Therefore, the control unit 41 ends the first operation at an appropriate timing.

The battery device 31 includes a voltage sensor 39. The voltage sensor 39 detects a voltage VA of the battery 32. The control unit 41 ends the first operation on the basis of the detection result of the voltage sensor 39. Therefore, the control unit 41 ends the first operation at an appropriate timing.

When the control unit 41 ends the first operation, the control unit 41 electrically disconnects the battery 32 from the discharging unit 46. Therefore, the first operation is appropriately ended.

When the control unit 41 ends the first operation, the control unit 41 controls the first switch 47 to electrically disconnect the battery 32 from the discharging unit 46. Therefore, it is easy for the control unit 41 to electrically disconnect the battery 32 from the discharging unit 46 at the end of the first operation.

The straddled electric vehicle 1 includes the electric motor 21 and the battery device 31. The electric motor 21 propels the straddled electric vehicle 1. The battery device 31 includes the battery 32, the inclination sensor 38, and the control unit 41. The battery 32 supplies electric power to the electric motor 21. The inclination sensor 38 detects an inclination angle θA of the battery 32. The control unit 41 acquires the accumulated time TA during which the battery 32 is in the inclined state on the basis of the detection result of the inclination sensor 38. When the accumulated time TA exceeds the limit time TB, the control unit 41 executes the specific operation.

Here, when the accumulated time TA exceeds the limit time TB, the storage capacity of the battery 32 may deteriorate. Therefore, when the storage capacity of the battery 32 may deteriorate, the specific operation is executed. Therefore, the battery device 31 appropriately deals with deterioration of the storage capacity of the battery 32. That is, the straddled electric vehicle 1 appropriately deals with deterioration of the storage capacity of the battery 32.

The electric motor 21 propels the straddled electric vehicle 1. The battery 32 supplies electric power to the electric motor 21. A management method of the battery 32 includes a time counting step, a time determination step, and an execution step. In the time counting step, the accumulated time TA during which the battery 32 is in the inclined state is acquired. In the time determination step, it is determined whether the accumulated time TA exceeds the limit time TB. In the execution step, when the accumulated time TA exceeds the limit time TB, the specific operation is executed on the battery 32.

Here, when the accumulated time TA exceeds the limit time TB, the storage capacity of the battery 32 may deteriorate. Therefore, when the storage capacity of the battery 32 may deteriorate, the specific operation is executed. Therefore, the management method of the battery 32 appropriately deals with deterioration of the storage capacity of the battery 32.

### <5. Modified embodiments>

The present invention is not limited to the above embodiment, and can be modified as follows.

(1) The limit time TB may be a variable. According to this, it is easy to change the timing at which the accumulated time TA exceeds the limit time TB. In other words, it is easy to change the timing at which the specific operation is executed. It is easy to change the timing at which the battery device 31 deals with deterioration of the storage capacity of the battery 32.

For example, the limit time TB is a variable that depends on the inclination angle θA of the battery 32 in the inclined state. In other words, the limit time TB is a variable that depends on the inclination angle θA in the inclination period L. According to this, the timing at which the battery device 31 deals with deterioration of the storage capacity of the battery appropriately changes.

For example, the limit time TB decreases as the inclination angle θA of the battery 32 in the inclined state increases. In other words, the limit time TB decreases as the inclination angle θA in the inclination period L increases. Therefore, it is easy to set the limit time TB as a variable that depends on the inclination angle θA of the battery 32 in the inclined state.

The inclined state of the battery 32 is classified into "gently inclined state" and "steeply inclined state". The gently inclined state is defined as a state of the battery 32 when the inclination angle θA of the battery 32 is equal to or greater than a small reference angle θBS. The steeply inclined state is defined as a state of the battery 32 when the inclination angle θA of the battery 32 is equal to or greater than a large reference angle θBL. The accumulated time TA during which the battery 32 is in the gently inclined state is referred to as "first accumulated time TA1". The accumulated time TA during which the battery 32 is in the steeply inclined state is referred to as "second accumulated time TA2". The control unit 41 acquires the first accumulated time TA1 and the second accumulated time TA2 on the basis of the detection result of the inclination sensor 38. When the first accumulated time TA1 exceeds a first limit time TB1 or when the second accumulated time TA2 exceeds a second limit time TB2, the control unit 41 executes the specific operation. The time when the first accumulated time TA1 exceeds the first limit time TB1 is referred to as "first timing". The time when the second accumulated time TA2 exceeds the second limit time TB2 is referred to as "second timing". When the first timing is earlier than the second timing, the control unit 41 executes the specific operation at the first timing. When the second timing is earlier than the first timing, the control unit 41 executes the specific operation at the second timing. Here, the large reference angle θBL is larger than the small reference angle θBS. The second limit time TB2 is shorter than the first limit time TB1. Therefore, it is easy to set the limit time TB as a variable that depends on the inclination angle θA of the battery 32 in the inclined state. Furthermore, it is easy to shorten the limit time TB as the inclination angle θA of the battery 32 in the inclined state increases.

(2) Another example of the definition of the inclination angle θA will be described.

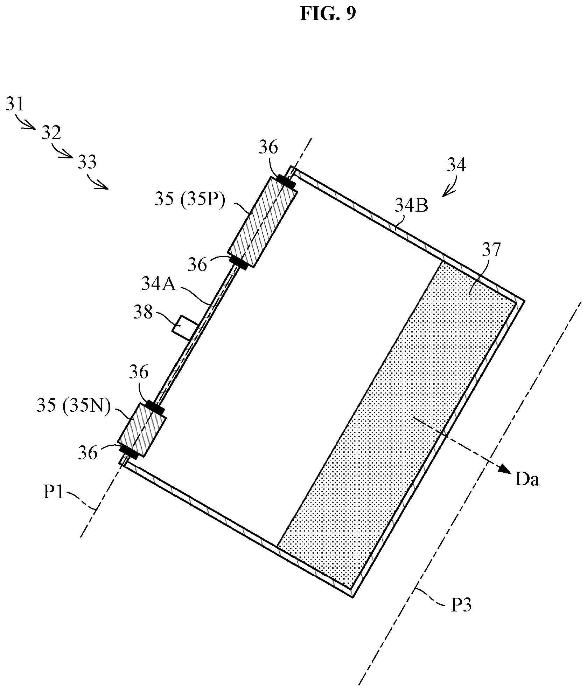

Fig. 9 is a cross-sectional view illustrating the structure of the battery 32. The same components as those of the embodiment are denoted by the same reference numerals, and a detailed description thereof will be omitted.

For example, the inclination angle θA is a second inclination angle θA2. The second inclination angle θA2 is defined in consideration of the acceleration acting on the battery 32. Specifically, the second inclination angle θA2 is an angle between the first imaginary plane P1 and a third imaginary plane P3. The first imaginary plane P1 and the third imaginary plane P3 are imaginary planes. The first imaginary plane P1 is parallel to the top plate 34A. The third imaginary plane P3 is perpendicular to a direction Da of acceleration acting on the battery 32.

In Fig. 9, the first imaginary plane P1 and the third imaginary plane P3 are parallel to each other. Therefore, in Fig. 9, the second inclination angle θA2 is 0 degrees. Note that Fig. 9 does not explicitly show the second inclination angle θA2.

For example, in Fig. 9, the second inclination angle θA2 is less than the reference angle θB. When the inclination angle θA is the second inclination angle θA2, the battery 32 illustrated in Fig. 9 is not in the inclined state. When the inclination angle θA is the second inclination angle θA2, the battery 32 illustrated in Fig. 9 is not in the inclination period L.

The position of the electrolytic solution 37 in the case 34 changes according to the direction Da of acceleration acting on the battery 32. Therefore, the second inclination angle θA2 is further correlated with the positional relationship between the terminal 35 and the electrolytic solution 37. Thus, the second inclination angle θA2 is more suitable as the inclination angle θA for defining the inclined state of the battery 32.

For example, the acceleration acting on the battery 32 is a resultant force of gravity and a centrifugal force acting on the battery 32. For example, the direction Da is a direction of the resultant force of gravity and a centrifugal force acting on the battery 32. The second inclination angle θA2 is defined in consideration of gravity and the centrifugal force acting on the battery 32. According to this, even when the straddled electric vehicle 1 turns on a curved road, the second inclination angle θA2 is suitable as the inclination angle θA for defining the inclined state of the battery 32.

For example, when the straddled electric vehicle 1 turns on a curved road, the centrifugal force acts on the battery 32. Therefore, the terminal 35 and the electrolytic solution 37 may be disposed at positions illustrated in Fig. 9. In the positional relationship between the terminal 35 and the electrolytic solution 37 illustrated in Fig. 9, there is no possibility that the terminal 35 comes into contact with the electrolytic solution 37 even though at least a part of the terminal 35 is located at the lower part of the case 34. As described above, when the inclination angle θA is the second inclination angle θA2, the battery 32 illustrated in Fig. 9 is not in the inclination period L. Therefore, the inclination period L does not include a period during which there is no possibility that the terminal 35 comes into contact with the electrolytic solution 37. Thus, when the inclination angle θA is the second inclination angle θA2, the inclination period L is measured with high accuracy. Therefore, when the inclination angle θA is the second inclination angle θA2, the accumulated time TA is obtained with high accuracy.

For example, the inclination sensor 38 may detect the second inclination angle θA2. In this case, the control unit 41 acquires the second inclination angle θA2 on the basis of the detection result of the inclination sensor 38.

Alternatively, the inclination sensor 38 may detect the first inclination angle θA1 without detecting the second inclination angle θA2. In this case, the control unit 41 acquires the centrifugal force acting on the battery 32 on the basis of the first inclination angle θA1 obtained from the inclination sensor 38 and the speed SA obtained from the speed sensor 55. Then, the control unit 41 acquires the second inclination angle θA2 on the basis of the first inclination angle θA1 and the centrifugal force acting on the battery 32.

(3) The reference angle θB may be a variable. According to this, it is easy to change the definition of the inclined state of the battery 32.

For example, the reference angle θB is a variable that depends on the speed SA of the straddled electric vehicle 1. Therefore, the inclined state of the battery 32 is defined by the inclination angle θA and the speed SA.

For example, the reference angle θB when the straddled electric vehicle 1 is traveling is larger than the reference angle θB when the straddled electric vehicle 1 is stopped. Therefore, the inclined state of the battery 32 is more appropriately defined.

For example, the reference angle θB when the speed SA is equal to or greater than a threshold value is larger than the reference angle θB when the speed SA is less than the threshold value. Therefore, the inclined state of the battery 32 is more appropriately defined.

For example, the reference angle θB increases as the speed SA increases. Therefore, the inclined state of the battery 32 is more appropriately defined.

For example, the reference angle θB is a variable that depends on the definition of the inclination angle θA. For example, the reference angle θB when the inclination angle θA is the second inclination angle θA2 may be different from the reference angle θB when the inclination angle θA is the first inclination angle θA1. Therefore, the inclined state of the battery 32 is more appropriately defined.

(4) The specific operation other than the first operation will be exemplified. For example, the specific operation may include at least one of the first operation, the second operation, the third operation, and the fourth operation. For example, the specific operation may include all of the first operation, the second operation, the third operation, and the fourth operation.

The second operation is to prohibit supply of electric power from the battery 32 to the electric motor 21. The third operation is to prohibit charging of the battery 32. The fourth operation is to issue an alarm.

The straddled electric vehicle 1 according to first, second, and third modified embodiments will be described with reference to the drawings.

### (4-1) First modified embodiment

The first modified embodiment is for executing the second operation.

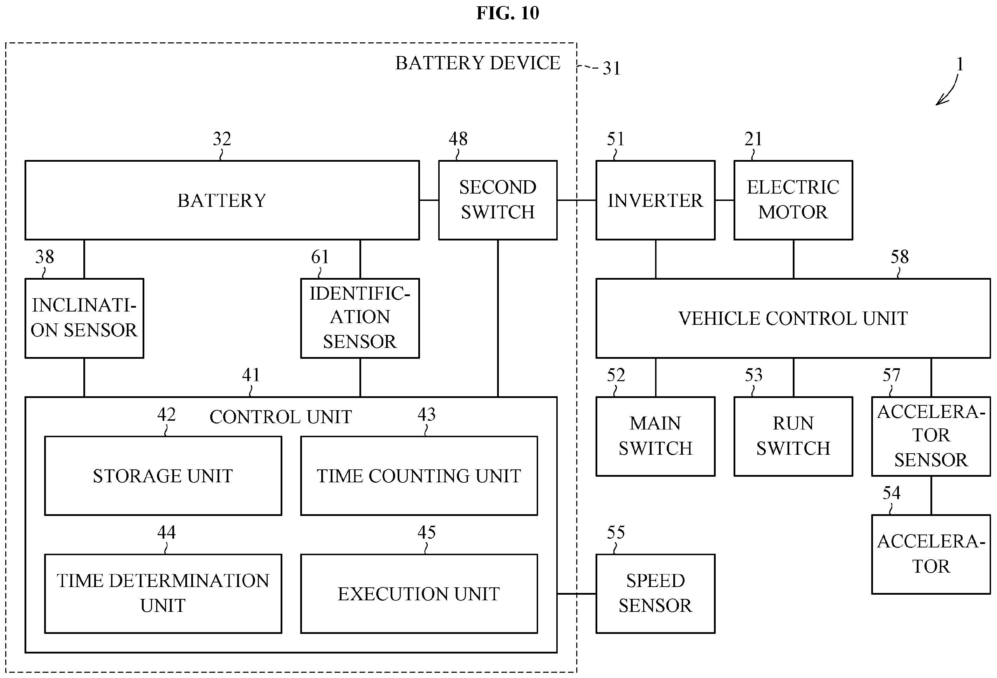

Fig. 10 is a block diagram of a straddled electric vehicle of the first modified embodiment. The same components as those of the embodiment are denoted by the same reference numerals, and a detailed description thereof will be omitted.

The battery device 31 includes a second switch 48. The second switch 48 electrically connects and disconnects the battery 32 and the electric motor 21. For example, the second switch 48 opens and closes an electric circuit between the battery 32 and the electric motor 21. The second switch 48 is controlled by the control unit 41.

The control unit 41 is electrically connected to the speed sensor 55. The control unit 41 acquires a detection result of the speed sensor 55. The control unit 41 acquires the speed SA.

The battery device 31 includes an identification sensor 61. The identification sensor 61 acquires identification information of the battery 32.

The control unit 41 is electrically connected to the identification sensor 61. The control unit 41 acquires a detection result of the identification sensor 61. The control unit 41 acquires identification information of the battery 32.

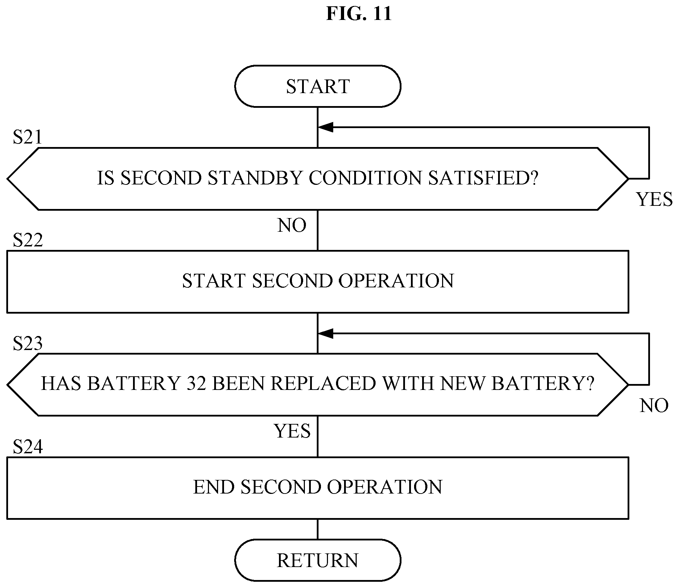

The second operation will be described. Fig. 11 is a flowchart illustrating a procedure of the second operation.

### Step S21

The control unit 41 determines whether the second standby condition is satisfied on the basis of the detection result of the speed sensor 55. The second standby condition is that the straddled electric vehicle 1 is traveling.

The second standby condition is, for example, that the speed SA of the straddled electric vehicle 1 is equal to or greater than a reference speed SB.

The reference speed SB is set in advance. The reference speed SB is, for example, 10 km/h.

The reference speed SB is stored in the storage unit 42, for example. The control unit 41 compares the speed SA detected by the speed sensor 55 and the reference speed SB stored in the storage unit 42. Thereby, the control unit 41 determines whether the speed SA is equal to or greater than the reference speed SB.

When the second standby condition is not satisfied, the process proceeds from step S21 to step S22.

When the second standby condition is satisfied, step S21 is executed again. Step S21 is repeated until the second standby condition is no longer satisfied. When the second standby condition is no longer satisfied, the process proceeds from step S21 to step S22.

### Step S22

The control unit 41 starts the second operation. In the second operation, the control unit 41 prohibits supply of electric power from the battery 32 to the electric motor 21. In the second operation, the control unit 41 electrically disconnects the battery 32 from the electric motor 21. For example, in the second operation, the control unit 41 controls the second switch 48 to electrically disconnect the battery 32 from the electric motor 21.

### Step S23

The control unit 41 determines whether the battery 32 has been replaced with a new battery.

The "battery 32" is referred to as "first battery 32a". The accumulated time TA of the first battery 32a is equal to or greater than the limit time TB. The "new battery" is referred to as "second battery 32b". The accumulated time TA of the second battery 32b is less than the limit time TB. The identification information of the second battery 32b is different from the identification information of the first battery 32a. The control unit 41 determines whether the first battery 32a has been replaced with the second battery 32b on the basis of the detection result of the identification sensor 61.

When the first battery 32a has not been replaced with the second battery 32b, step S23 is executed again. Step S23 is repeated until the first battery 32a is replaced with the second battery 32b. When the first battery 32a has been replaced with the second battery 32b, the process proceeds from step S23 to step S24.

### Step S24

The control unit 41 ends the second operation. When the control unit 41 ends the second operation, the control unit 41 allows supply of electric power from the second battery 32b to the electric motor 21. The control unit 41 electrically connects the second battery 32b to the electric motor 21. The control unit 41 controls the second switch 48 to electrically connect the battery 32 and the electric motor 21.

As described above, the procedure of the second operation includes step S21. Therefore, in a case where the second standby condition is not satisfied when the accumulated time TA exceeds the limit time TB, the control unit 41 starts the second operation. For example, in a case where the speed SA is less than the reference speed SB when the accumulated time TA exceeds the limit time TB, the control unit 41 starts the second operation.

In a case where the second standby condition is satisfied when the accumulated time TA exceeds the limit time TB, the control unit 41 waits for start of the second operation. For example, in a case where the speed SA is equal to or greater than the reference speed SB when the accumulated time TA exceeds the limit time TB, the control unit 41 waits for start of the second operation.

The control unit 41 waits for start of the second operation until the second standby condition is no longer satisfied. For example, the control unit 41 waits for start of the second operation until the speed SA becomes less than the reference speed SB.

When the second standby condition is no longer satisfied, the control unit 41 starts the second operation. For example, when the speed SA becomes less than the reference speed SB, the control unit 41 starts the second operation.

The procedure of the second operation includes step S23. Therefore, the second operation is continued until the first battery 32a is replaced with the second battery 32b. When the first battery 32a has been replaced with the second battery 32b, the second operation ends.

The effects of the first modified embodiment will be described.

In the first modified embodiment, the specific operation includes the second operation. In the second operation, supply of electric power from the battery 32 to the electric motor 21 is prohibited. Therefore, in the second operation, the battery 32 is not used for propulsion of the straddled electric vehicle 1. Therefore, the second operation appropriately deals with deterioration of the storage capacity of the battery 32.

In the second operation, the control unit 41 electrically disconnects the battery 32 from the electric motor 21. Therefore, it is easy to prohibit supply of electric power from the battery 32 to the electric motor 21 in the second operation.

In a case where the second standby condition is satisfied when the accumulated time TA exceeds the limit time TB, the control unit 41 waits for start of the second operation. The second standby condition is that the straddled electric vehicle 1 is traveling. In a case where the second standby condition is satisfied when the accumulated time TA exceeds the limit time TB, the control unit 41 does not prohibit supply of electric power from the battery 32 to the electric motor 21. Therefore, in a case where the second standby condition is satisfied when the accumulated time TA exceeds the limit time TB, the control unit 41 allows supply of electric power from the battery 32 to the electric motor 21. Thus, in a case where the second standby condition is satisfied when the accumulated time TA exceeds the limit time TB, the electric motor 21 smoothly propels the straddled electric vehicle 1. That is, in a case where the second standby condition is satisfied when the accumulated time TA exceeds the limit time TB, the straddled electric vehicle 1 smoothly travels. Therefore, in a case where the second standby condition is satisfied when the accumulated time TA exceeds the limit time TB, it is easy for the driver to smoothly drive the straddled electric vehicle 1.

The control unit 41 waits for start of the second operation until the second standby condition is no longer satisfied. Therefore, the battery device 31 does not hinder the traveling of the straddled electric vehicle 1.

When the second standby condition is no longer satisfied, the control unit 41 starts the second operation. Therefore, the control unit 41 starts the second operation at an appropriate timing.

The control unit 41 continues the second operation until the first battery 32a is replaced with the second battery 32b. Therefore, the second operation more appropriately deals with deterioration of the storage capacity of the battery 32.

When the first battery 32a has been replaced with the second battery 32b, the control unit 41 ends the second operation. Therefore, the control unit 41 ends the second operation at an appropriate timing.

### (4-2) Second modified embodiment

The second modified embodiment is for executing the third operation.

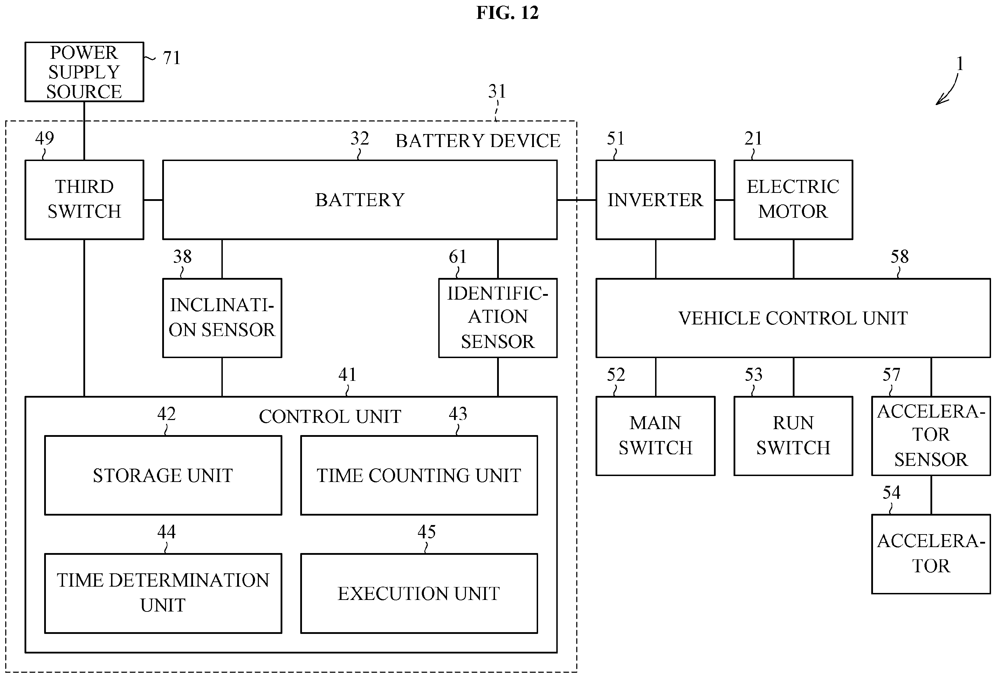

Fig. 12 is a block diagram of a straddled electric vehicle of the second modified embodiment. The same components as those of the embodiment are denoted by the same reference numerals, and a detailed description thereof will be omitted.

The battery device 31 includes a third switch 49. The third switch 49 electrically connects and disconnects the battery 32 and a power supply source 71. For example, the third switch 49 opens and closes an electric circuit between the battery 32 and the power supply source 71. The third switch 49 is controlled by the control unit 41.

The power supply source 71 is for charging the battery 32. The power supply source 71 supplies electric power to the battery 32. The power supply source 71 is an external power source provided outside the straddled electric vehicle 1. The power supply source 71 is provided, for example, at home. The power supply source 71 is provided, for example, in a charging station. The power supply source 71 is, for example, a commercial power source.

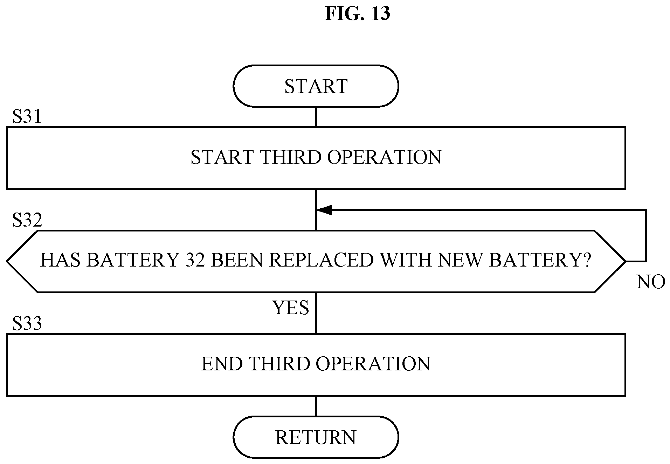

The third operation will be described. Fig. 13 is a flowchart illustrating a procedure of the third operation.

### Step S31

When the accumulated time TA exceeds the limit time TB, the control unit 41 starts the third operation. In the third operation, the control unit 41 prohibits charging of the battery 32. In the third operation, the control unit 41 electrically disconnects the battery 32 from the power supply source 71. For example, in the third operation, the control unit 41 controls the third switch 49 to electrically disconnect the battery 32 from the power supply source 71.

When the accumulated time TA exceeds the limit time TB during charging of the battery 41, the control unit 41 stops charging of the battery 32. When the accumulated time TA exceeds the limit time TB during charging of the battery 41, the control unit 41 forcibly ends charging of the battery 32. When the accumulated time TA exceeds the limit time TB during charging of the battery 41, the control unit 41 forcibly and electrically disconnects the battery 41 from the power supply source 71. For example, when the accumulated time TA exceeds the limit time TB during charging of the battery 41, the control unit 41 controls the third switch 49 to forcibly and electrically disconnect the battery 41 from the power supply source 71.

### Step S32

The control unit 41 determines whether the battery 32 has been replaced with a new battery. Specifically, the control unit 41 determines whether the first battery 32a has been replaced with the second battery 32b on the basis of the detection result of the identification sensor 61.

When the first battery 32a has not been replaced with the second battery 32b, step S32 is executed again. Step S32 is repeated until the first battery 32a is replaced with the second battery 32b. When the first battery 32a has been replaced with the second battery 32b, the process proceeds from step S32 to step S33.

### Step S33

The control unit 41 ends the third operation. When the control unit 41 ends the third operation, the control unit 41 allows charging of the second battery 32b. The control unit 41 electrically connects the second battery 32b to the power supply source 71. The control unit 41 controls the third switch 49 to electrically connect the battery 32 and the power supply source 71.

As described above, the procedure of the third operation includes step S32. Therefore, the third operation is continued until the first battery 32a is replaced with the second battery 32b. When the first battery 32a has been replaced with the second battery 32b, the third operation ends.

The effects of the second modified embodiment will be described.

In the second modified embodiment, the specific operation includes the third operation. In the third operation, charging of the battery 32 is prohibited. That is, in the third operation, the battery 32 is not charged. Therefore, the third operation appropriately deals with deterioration of the storage capacity of the battery 32.

In the third operation, the control unit 41 electrically disconnects the battery 32 from the power supply source 71. Therefore, it is easy to prohibit charging of the battery 32 in the third operation. In other words, it is easy to prohibit supply of electric power from the power supply source 71 to the battery 32 in the third operation.

When the accumulated time TA exceeds the limit time TB during charging of the battery 32, the control unit 41 stops charging of the battery 32. Therefore, it is easy for the control unit 41 to quickly start the third operation.

The control unit 41 continues the third operation until the first battery 32a is replaced with the second battery 32b. Therefore, the third operation more appropriately deals with deterioration of the storage capacity of the battery 32.

When the first battery 32a has been replaced with the second battery 32b, the control unit 41 ends the third operation. Therefore, the control unit 41 ends the third operation at an appropriate timing.

### (4-3) Third modified embodiment

The third modified embodiment is for executing the fourth operation.

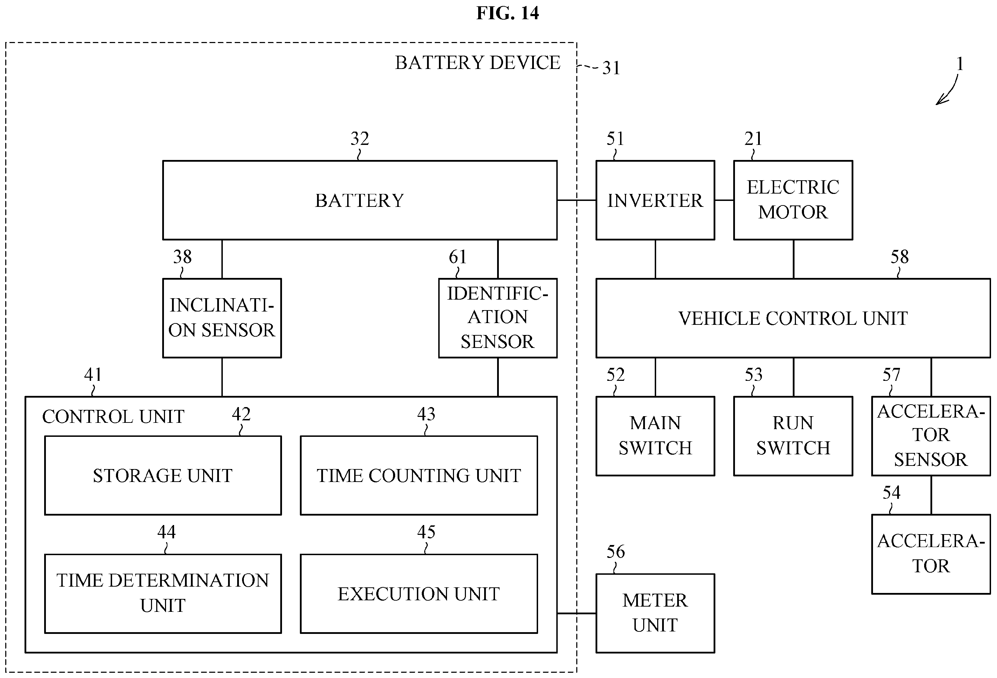

Fig. 14 is a block diagram of a straddled electric vehicle of the third modified embodiment. The same components as those of the embodiment are denoted by the same reference numerals, and a detailed description thereof will be omitted.

The control unit 41 is electrically connected to the meter unit 56. The control unit 41 controls the meter unit 56.

The meter unit 56 is configured to be able to issue an alarm. The alarm is for notifying deterioration of the storage capacity of the battery 32. The meter unit 56 issues an alarm using at least one of light, sound, and vibration.

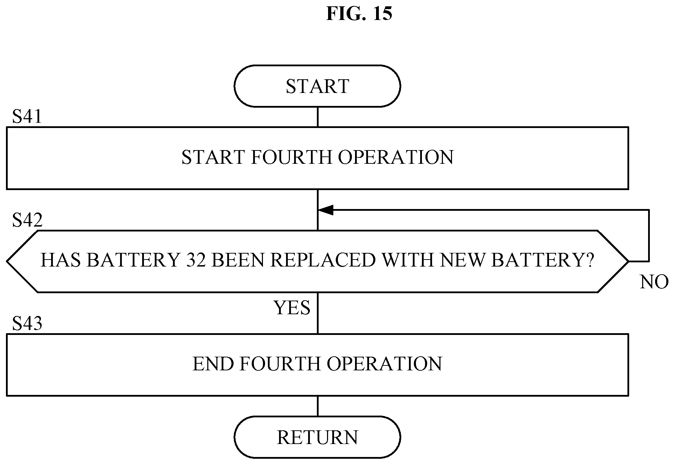

The fourth operation will be described. Fig. 15 is a flowchart illustrating a procedure of the fourth operation.

### Step S41

When the accumulated time TA exceeds the limit time TB, the control unit 41 starts the fourth operation. In the fourth operation, the control unit 41 issues an alarm from the meter unit 56.

### Step S42

The control unit 41 determines whether the battery 32 has been replaced with a new battery. Specifically, the control unit 41 determines whether the first battery 32a has been replaced with the second battery 32b on the basis of the detection result of the identification sensor 61.

When the first battery 32a has not been replaced with the second battery 32b, step S42 is executed again. Step S42 is repeated until the first battery 32a is replaced with the second battery 32b. When the first battery 32a has been replaced with the second battery 32b, the process proceeds from step S42 to step S43.

### Step S43

The control unit 41 ends the fourth operation. When the control unit 41 ends the fourth operation, the control unit 41 cancels the alarm. The meter unit 56 stops issuing the alarm.

As described above, the procedure of the fourth operation includes step S42. Therefore, the fourth operation is continued until the first battery 32a is replaced with the second battery 32b. When the first battery 32a has been replaced with the second battery 32b, the fourth operation ends.

In the third modified embodiment, the meter unit 56 is an example of the output unit of the present invention.

The effects of the third modified embodiment will be described.

In the third modified embodiment, the specific operation includes the fourth operation. In the fourth operation, the alarm is issued from the meter unit 56. Therefore, the fourth operation appropriately deals with deterioration of the storage capacity of the battery 32.

The control unit 41 continues the fourth operation until the first battery 32a is replaced with the second battery 32b. Therefore, the fourth operation more appropriately deals with deterioration of the storage capacity of the battery 32.

When the first battery 32a has been replaced with the second battery 32b, the control unit 41 ends the fourth operation. Therefore, the control unit 41 ends the fourth operation at an appropriate timing.

(5) In the embodiment, when the first operation is not executed, the first operation may be prohibited. According to this, the first operation is executed only when the specific operation is executed. Thus, the discharging unit 46 is provided only for the specific operation. The discharging unit 46 is used only in the specific operation. The discharging unit 46 is exclusively for reducing the remaining capacity of the battery 32. Therefore, it is easier to reduce the remaining capacity of the battery 32 in the first operation.

For example, when the specific operation is not executed, the control unit 41 disconnects the battery 32 from the discharging unit 46. According to this, it is easy to prohibit the first operation when the first operation is not executed.

For example, when the first operation is not executed, the control unit 41 controls the first switch 47 to electrically disconnect the battery 32 from the discharging unit 46. According to this, it is easy for the control unit 41 to electrically disconnect the battery 32 from the discharging unit 46 when the first operation is not executed.

(6) In the first modified embodiment, when the second operation is not executed, the control unit 41 may allow supply of electric power from the battery 32 to the electric motor 21. For example, when the second operation is not executed, the control unit 41 electrically connects the battery 32 to the electric motor 21. For example, when the second operation is not executed, the control unit 41 controls the second switch 48 to electrically connect the battery 32 and the electric motor 21. According to this, the second switch 48 is provided only for the second operation. Only during the second operation, the second switch 48 electrically disconnects the battery 32 from the electric motor 21.
(7) In the second modified embodiment, when the third operation is not executed, the control unit 41 may allow charging of the battery 32. For example, when the third operation is not executed, the control unit 41 electrically connects the battery 32 to the power supply source 71. For example, when the third operation is not executed, the control unit 41 controls the third switch 49 to electrically connect the battery 32 and the power supply source 71. According to this, the third switch 49 is provided only for the third operation. Only during the third operation, the third switch 49 electrically disconnects the battery 32 from the power supply source 71.
(8) The first standby condition may be that the second switch 48 electrically connects the battery 32 and the electric motor 21. In this case, the control unit 41 determines whether the first standby condition is satisfied on the basis of the state of the second switch 48.
(9) In the embodiment, step S11 may be changed as appropriate.

One modified example of step S11 will be described. For example, step S11 is omitted. When the accumulated time TA exceeds the limit time TB, the control unit 41 starts the first operation. Even in a case where the first standby condition is satisfied when the accumulated time TA exceeds the limit time TB, the control unit 41 does not wait for start of the first operation. Even in a case where the first standby condition is satisfied when the accumulated time TA exceeds the limit time TB, the control unit 41 starts the first operation.

Another modified example of step S11 will be described. For example, in step S11, the first standby condition is changed to the second standby condition. The second standby condition has been described in the first modified embodiment.

Specifically, in a case where the second standby condition is satisfied when the accumulated time TA exceeds the limit time TB, the control unit 41 waits for start of the first operation. According to this, in a case where the second standby condition is satisfied when the accumulated time TA exceeds the limit time TB, the control unit 41 does not discharge the battery 32 through the discharging unit 46. Therefore, in a case where the second standby condition is satisfied when the accumulated time TA exceeds the limit time TB, the control unit 41 allows the battery 32 to supply sufficient electric power to the electric motor 21. Thus, in a case where the second standby condition is satisfied when the accumulated time TA exceeds the limit time TB, the electric motor 21 smoothly propels the straddled electric vehicle 1. That is, in a case where the second standby condition is satisfied when the accumulated time TA exceeds the limit time TB, the straddled electric vehicle 1 smoothly travels. Therefore, in a case where the second standby condition is satisfied when the accumulated time TA exceeds the limit time TB, it is easy for the driver to smoothly drive the straddled electric vehicle 1.

For example, the control unit 41 waits for start of the first operation until the second standby condition is no longer satisfied. Therefore, the battery device 31 does not hinder the traveling of the straddled electric vehicle 1.

For example, when the second standby condition is no longer satisfied, the control unit 41 starts the first operation. Therefore, the control unit 41 starts the first operation at an appropriate timing.

(10) In the first modified embodiment, step S21 may be changed as appropriate.

One modified example of step S21 will be described. For example, step S21 is omitted. When the accumulated time TA exceeds the limit time TB, the control unit 41 starts the second operation. Even in a case where the second standby condition is satisfied when the accumulated time TA exceeds the limit time TB, the control unit 41 does not wait for start of the second operation. Even in a case where the second standby condition is satisfied when the accumulated time TA exceeds the limit time TB, the control unit 41 starts the second operation.

Another modified example of step S21 will be described. For example, in step S21, the second standby condition is changed to the first standby condition.

Specifically, in a case where the first standby condition is satisfied when the accumulated time TA exceeds the limit time TB, the control unit 41 waits for start of the second operation. According to this, in a case where the first standby condition is satisfied when the accumulated time TA exceeds the limit time TB, the control unit 41 does not prohibit supply of electric power from the battery 32 to the electric motor 21. Therefore, in a case where the first standby condition is satisfied when the accumulated time TA exceeds the limit time TB, the control unit 41 allows supply of electric power from the battery 32 to the electric motor 21. Thus, in a case where the first standby condition is satisfied when the accumulated time TA exceeds the limit time TB, the electric motor 21 operates smoothly according to the operation of the accelerator 54. Therefore, in a case where the first standby condition is satisfied when the accumulated time TA exceeds the limit time TB, it is easy for the driver of the straddled electric vehicle 1 to drive the electric motor 21 by operating the accelerator 54.

For example, the control unit 41 waits for start of the second operation until the first standby condition is no longer satisfied. Therefore, the battery device 31 does not hinder the smooth operation of the electric motor 21 according to the operation of the accelerator 54.

For example, when the first standby condition is no longer satisfied, the control unit 41 starts the second operation. Therefore, the control unit 41 starts the second operation at an appropriate timing.

(11) In the second operation, supply of electric power from the battery 32 to the electric motor 21 may be prohibited without using the second switch 48. For example, in the second operation, the control unit 41 keeps the run switch 53 in the off-state. For example, in the second operation, the control unit 41 holds the run switch 53 in the off-state. For example, in the second operation, the control unit 41 prohibits the run switch 53 from being switched from the off-state to the on-state. For example, in the second operation, regardless of the operation of the run switch 53, the control unit 41 prohibits the run switch 53 from being switched from the off-state to the on-state. Accordingly, it is easy to prohibit supply of electric power from the battery 32 to the electric motor 21 in the second operation.
(12) The alarm in the fourth operation may be issued from an internal device of the battery device 31. For example, the battery device 31 includes an output unit (not illustrated). The output unit issues an alarm. The output unit issues an alarm using at least one of light, sound, and vibration.
(13) In the embodiment, when the inclination sensor 38 is abnormal, the control unit 41 may execute the specific operation. For example, in addition to a case where the accumulated time TA exceeds the limit time TB, in a case where the inclination sensor 38 is abnormal, the control unit 41 executes the specific operation. When the inclination sensor 38 is abnormal, it is unknown whether the storage capacity of the battery 32 deteriorates. The specific operation is also executed when it is unknown whether the storage capacity of the battery 32 deteriorates. Therefore, the battery device 31 more appropriately deals with deterioration of the storage capacity of the battery 32.

Here, "the inclination sensor 38 is abnormal" means, for example, the following state. For example, the inclination angle θA output from the inclination sensor 38 is an abnormal value. For example, the inclination sensor 38 does not output the inclination angle θA to the control unit 41. For example, the control unit 41 cannot acquire the detection result of the inclination sensor 38. For example, the inclination sensor 38 is damaged.

(14) The period during which the inclination sensor 38 detects the inclination angle θA of the battery 32 may be appropriately changed.

For example, when the straddled electric vehicle 1 is traveling and when the straddled electric vehicle 1 is stopped, the inclination sensor 38 detects the inclination angle θA of the battery 32. According to this, it is easy to monitor the inclination angle θA of the battery 32 when the straddled electric vehicle 1 is traveling and when the straddled electric vehicle 1 is stopped.

For example, when the straddled electric vehicle 1 is traveling, the inclination sensor 38 does not detect the inclination angle θA of the battery 32. The inclination sensor 38 detects the inclination angle θA of the battery 32 only when the straddled electric vehicle 1 is stopped. According to this, it is easier to monitor the inclination angle θA of the battery 32.

For example, when the speed SA is equal to or greater than the reference speed SB, the inclination sensor 38 does not detect the inclination angle θA of the battery 32. The inclination sensor 38 detects the inclination angle θA of the battery 32 only when the speed SA of the straddled electric vehicle 1 is less than the reference speed SB. According to this, it is easier to monitor the inclination angle θA of the battery 32.

For example, when the main switch 52 is in the on-state and when the main switch 52 is in the off-state, the inclination sensor 38 detects the inclination angle θA of the battery 32. According to this, it is easy to monitor the inclination angle θA of the battery 32 when the main switch 52 is in the on-state and when the main switch 52 is in the off-state.

For example, when the run switch 53 is in the on-state and when the run switch 53 is in the off-state, the inclination sensor 38 detects the inclination angle θA of the battery 32. According to this, it is easy to monitor the inclination angle θA of the battery 32 when the run switch 53 is in the on-state and when the run switch 53 is in the off-state.

For example, when the run switch 53 is in the on-state, the inclination sensor 38 does not detect the inclination angle θA of the battery 32. The inclination sensor 38 detects the inclination angle θA of the battery 32 only when the run switch 53 is in the off-state. According to this, it is easy to monitor the inclination angle θA of the battery 32.

(15) The period for acquiring the accumulated time TA may be appropriately changed.

For example, when the straddled electric vehicle 1 is traveling and when the straddled electric vehicle 1 is stopped, the control unit 41 acquires the accumulated time TA on the basis of the detection result of the inclination sensor 38. According to this, it is easy to monitor the accumulated time TA when the straddled electric vehicle 1 is traveling and when the straddled electric vehicle 1 is stopped.

For example, when the straddled electric vehicle 1 is traveling, the control unit 41 does not acquire the accumulated time TA. The control unit 41 acquires the accumulated time TA on the basis of the detection result of the inclination sensor 38 only when the straddled electric vehicle 1 is stopped. According to this, it is easier to monitor the accumulated time TA.

For example, when the speed SA is equal to or greater than the reference speed SB, the control unit 41 does not acquire the accumulated time TA. The control unit 41 acquires the accumulated time TA on the basis of the detection result of the inclination sensor 38 only when the speed SA of the straddled electric vehicle 1 is less than the reference speed SB. According to this, it is easier to monitor the inclination angle θA of the battery 32.

For example, when the main switch 52 is in the on-state and when the main switch 52 is in the off-state, the control unit 41 acquires the accumulated time TA on the basis of the detection result of the inclination sensor 38. According to this, it is easy to monitor the accumulated time TA when the main switch 52 is in the on-state and when the main switch 52 is in the off-state.

For example, when the run switch 53 is in the on-state and when the run switch 53 is in the off-state, the control unit 41 acquires the accumulated time TA on the basis of the detection result of the inclination sensor 38. According to this, it is easy to monitor the accumulated time TA when the run switch 53 is in the on-state and when the run switch 53 is in the off-state.

For example, when the run switch 53 is in the on-state, the control unit 41 does not acquire the accumulated time TA on the basis of the detection result of the inclination sensor 38. The control unit 41 acquires the accumulated time TA on the basis of the detection result of the inclination sensor 38 only when the run switch 53 is in the off-state. According to this, it is easy to monitor the accumulated time TA.

(16) In the embodiment, the battery 32 may be attachable to and detachable from the straddled electric vehicle 1. Even when the battery 32 is attachable to and detachable from the straddled electric vehicle 1, the battery device 31 appropriately deals with deterioration of the storage capacity of the battery 32.

For example, when the battery 32 is attached to the straddled electric vehicle 1 and when the battery 32 is removed from the straddled electric vehicle 1, the inclination sensor 38 detects the inclination angle θA of the battery 32. Therefore, it is easy to monitor the inclination angle θA of the battery 32 when the battery 32 is attached to the straddled electric vehicle 1 and when the battery 32 is removed from the straddled electric vehicle 1.

For example, when the battery 32 is attached to the straddled electric vehicle 1 and when the battery 32 is removed from the straddled electric vehicle 1, the control unit 41 acquires the accumulated time TA on the basis of the detection result of the inclination sensor 38. Therefore, it is easy to monitor the accumulated time TA when the battery 32 is attached to the straddled electric vehicle 1 and when the battery 32 is removed from the straddled electric vehicle 1.

(17) In the embodiment, the battery 32 may be fixed to the straddled electric vehicle 1 in a non-detachable manner from the straddled electric vehicle 1. Even when the battery 32 is fixed to the straddled electric vehicle 1 in a non-detachable manner from the straddled electric vehicle 1, the battery device 31 appropriately deals with deterioration of the storage capacity of the battery 32.
(18) In the embodiment, the battery device 31 may be attachable to and detachable from the straddled electric vehicle 1. Even when the battery device 31 is attachable to and detachable from the straddled electric vehicle 1, the battery device 31 appropriately deals with deterioration of the storage capacity of the battery 32.

For example, when the battery device 31 is attached to the straddled electric vehicle 1 and when the battery device 31 is removed from the straddled electric vehicle 1, the inclination sensor 38 detects the inclination angle θA of the battery 32. Therefore, it is easy to monitor the inclination angle θA of the battery 32 when the battery device 31 is attached to the straddled electric vehicle 1 and when the battery device 31 is removed from the straddled electric vehicle 1.

For example, when the battery device 31 is attached to the straddled electric vehicle 1 and when the battery device 31 is removed from the straddled electric vehicle 1, the control unit 41 acquires the accumulated time TA on the basis of the detection result of the inclination sensor 38. Therefore, it is easy to monitor the accumulated time TA when the battery device 31 is attached to the straddled electric vehicle 1 and when the battery device 31 is removed from the straddled electric vehicle 1.

(19) In the embodiment, when the battery device 31 is removed from the straddled electric vehicle 1, the control unit 41 may be alternately switched between an activation state and a pause state. In other words, the period during which the battery device 31 is removed from the straddled electric vehicle 1 may include a period during which the control unit 41 is in the activation state and a period during which the control unit 41 is in the pause state. According to this, when the battery device 31 is removed from the straddled electric vehicle 1, it is easy to reduce the power consumption of the control unit 41. Therefore, when the battery device 31 is removed from the straddled electric vehicle 1, it is easy for the control unit 41 to monitor the accumulated time TA over a long period of time.

For example, the period during which the control unit 41 is in the pause state is longer than the period during which the control unit is in the activation state. For example, when the battery device 31 is removed from the straddled electric vehicle 1, the period during which the control unit 41 is in the pause state is longer than the period during which the control unit is in the activation state. Therefore, when the battery device 31 is removed from the straddled electric vehicle 1, it is easier to reduce the power consumption of the control unit 41. Therefore, when the battery device 31 is removed from the straddled electric vehicle 1, it is easier for the control unit 41 to monitor the accumulated time TA over a long period of time.

For example, when the battery device 31 is removed from the straddled electric vehicle 1, the control unit 41 is activated at least once or more every 60 minutes. For example, when the battery device 31 is removed from the straddled electric vehicle 1, the control unit 41 is activated at least once or more within 60 minutes. Therefore, when the battery device 31 is removed from the straddled electric vehicle 1, it is easy for the control unit 41 to monitor the inclination angle θA of the battery 32. Therefore, when the battery device 31 is removed from the straddled electric vehicle 1, it is easy for the control unit 41 to accurately acquire the accumulated time TA.

(20) In the embodiment, the battery device 31 may be fixed to the straddled electric vehicle 1 in a non-detachable manner from the straddled electric vehicle 1. Even when the battery device 31 is fixed to the straddled electric vehicle 1 in a non-detachable manner from the straddled electric vehicle 1, the battery device 31 appropriately deals with deterioration of the storage capacity of the battery 32.

(21) In the embodiment, when the main switch 52 is in the off-state, the control unit 41 may be alternately switched between the activation state and the pause state. In other words, the period during which the main switch 52 is in the off-state may include a period during which the control unit 41 is in the activation state and a period during which the control unit 41 is in the pause state. According to this, when the main switch 52 is in the off-state, it is easy to reduce the power consumption of the control unit 41. Therefore, when the main switch 52 is in the off-state, it is easy for the control unit 41 to monitor the accumulated time TA over a long period of time.

For example, the period during which the control unit 41 is in the pause state is longer than the period during which the control unit 41 is in the activation state. For example, when the main switch 52 is in the off-state, the period during which the control unit 41 is in the pause state is longer than the period during which the control unit 41 is in the activation state. Therefore, even when the main switch 52 is in the off-state, it is easier to reduce the power consumption of the control unit 41. Therefore, it is easier for the control unit 41 to monitor the accumulated time TA over a long period of time.

For example, when the main switch 52 is in the off-state, the control unit 41 is activated at least once or more every 60 minutes. For example, when the main switch 52 is in the off-state, the control unit 41 is activated at least once or more within 60 minutes. Therefore, even when the main switch 52 is in the off-state, it is easy for the control unit 41 to monitor the inclination angle θA of the battery 32. Therefore, even when the main switch 52 is in the off-state, it is easy for the control unit 41 to accurately acquire the accumulated time TA.

One pause state of the control unit 41 is referred to as "first pause state". The activation state immediately before the first pause state is referred to as "pre-activation state". The activation state immediately after the first pause state is referred to as "post-activation state". The control unit 41 may determine whether the period of the first pause state is the inclination period L on the basis of the state of the battery 32 in at least one of the pre-activation state and the post-activation state.

For example, when the battery 32 is in the inclined state in the pre-activation state, the control unit 41 may determine that the period of the first pause state is the inclination period L. When the battery 32 is not in the inclined state in the pre-activation state, the control unit 41 may determine that the period of the first pause state is not the inclination period L.

Alternatively, when the battery 32 is in the inclined state in the post-activation state, the control unit 41 may determine that the period of the first pause state is the inclination period L. When the battery 32 is not in the inclined state in the post-activation state, the control unit 41 may determine that the period of the first pause state is not the inclination period L.

Alternatively, when the battery 32 is in the inclined state in the pre-activation state and when the battery 32 is in the inclined state in the post-activation state, the control unit 41 may determine that the period of the first pause state is the inclination period L. When the battery 32 is not in the inclined state in the pre-activation state, the control unit 41 may determine that the period of the first pause state is not the inclination period L. When the battery 32 is not in the inclined state in the post-activation state, the control unit 41 may determine that the period of the first pause state is not the inclination period L.

(22) The battery 32 may be a nickel-metal hydride battery.
(23) The material of the terminal 35 may be appropriately changed. The material of the negative electrode terminal 35N may be appropriately changed. For example, only a part of the negative electrode terminal 35N may be made of copper. For example, the negative electrode terminal 35N may contain a plurality of materials. Similarly, the material of the positive electrode terminal 35P may be appropriately changed. For example, only a part of the positive electrode terminal 35P may be made of aluminum. For example, the positive electrode terminal 35P may contain a plurality of materials.

Another example of the negative electrode terminal 35N will be described. Although not illustrated, the negative electrode terminal 35N has a first portion and a second portion. The first portion of the negative electrode terminal 35N is made of a material different from the material of the case 34. The first portion of the negative electrode terminal 35N is made of, for example, copper. The second portion of the negative electrode terminal 35N is made of a material different from the material of the first portion of the negative electrode terminal 35N. The second portion of the negative electrode terminal 35N is made of the same material as the material of the case 34. The second portion of the negative electrode terminal 35N is made of, for example, aluminum.

The first portion of the negative electrode terminal 35N is located inside the case 34. The second portion of the negative electrode terminal 35N is located outside the case 34. The second portion of the negative electrode terminal 35N is in contact with air outside the case 34.

When the battery 32 is in the inclined state, the case 34 may be electrically connected to the first portion of the negative electrode terminal 35N through the electrolytic solution 37. Aluminum constituting the case 34 may be electrically connected to copper constituting the first portion of the negative electrode terminal 35N through the electrolytic solution 37.

(24) The relationship between the size of the negative electrode terminal 35N and the size of the positive electrode terminal 35P may be appropriately changed. For example, the size of the positive electrode terminal 35P may be equal to the size of the negative electrode terminal 35N. For example, the size of the positive electrode terminal 35P may be smaller than the size of the negative electrode terminal 35N. For example, the size of the positive electrode terminal 35P may be larger than the size of the negative electrode terminal 35N.
(25) The battery 32 may be swingable with respect to the vehicle body frame 3.
(26) The position of the inclination sensor 38 with respect to the battery 32 may be appropriately changed. For example, the inclination sensor 38 may be attached to the terminal 35. According to this, it is easy to detect the inclination of the terminal 35.
(27) The battery device 31 may be swingable with respect to the vehicle body frame 3.
(28) The battery device 31 may not include the discharging unit 46. The discharging unit 46 may not be an element of the battery device 31. The discharging unit 46 may be provided outside the battery device 31. The discharging unit 46 may be installed in a portion of the straddled electric vehicle 1 other than the battery device 31. According to this, it is easy to reduce the size of the battery device 31.
(29) The electric motor 21 may be disposed on the rear wheel 23. The electric motor 21 may overlap the rear wheel 23 in side view of the straddled electric vehicle 1. The output shaft of the electric motor 21 may be coaxial with the rear axle of the rear wheel 23.
(30) The electric motor 21 may be a DC motor. When the electric motor 21 is a DC motor, the straddled electric vehicle 1 may not include the inverter 51.
(31) The electric motor 21 may be swingable with respect to the vehicle body frame 3.
(32) In the embodiment, the number of front wheels 12 was one. However, the present invention is not limited thereto. The number of front wheels 12 may be two. In the embodiment, the number of rear wheels 23 was one. The present invention is not limited thereto. The number of rear wheels 23 may be two.
(33) In the embodiment, an off-road type vehicle as the straddled electric vehicle 1 has been exemplified. However, the present invention is not limited thereto. For example, the straddled electric vehicle 1 may be changed to vehicles of other types, such as a scooter-type, a street type, a sport type, or an all-terrain vehicle.
(34) In the embodiment and each modified embodiment described in the above (1) to (33), each configuration may be appropriately changed by further replacing or combining each configuration with a configuration of another modified embodiment.

### Reference Signs List

- 1: straddled electric vehicle
- 3: vehicle body frame
- 11: front fork
- 12: front wheel
- 13: handlebar
- 14: seat
- 21: electric motor
- 22: swing arm
- 23: rear wheel
- 24: power transmission mechanism
- 31: battery device
- 32: battery
- 33: cell
- 34: case
- 34A: top plate
- 34B: case body
- 35: terminal
- 35N: negative electrode terminal
- 35P: positive electrode terminal
- 36: insulator
- 37: electrolytic solution
- 38: inclination sensor
- 39: voltage sensor
- 41: control unit
- 42: storage unit
- 43: time counting unit
- 44: time determination unit
- 45: execution unit
- 46: discharging unit
- 47: first switch
- 48: second switch
- 49: third switch
- 51: inverter
- 52: main switch
- 53: run switch
- 54: accelerator
- 55: speed sensor
- 56: meter unit
- 57: accelerator sensor
- 58: vehicle control unit
- 61: identification sensor
- 71: power supply source
- Dg: direction of gravity
- Da: direction of acceleration
- L: inclination period
- P1: first imaginary plane
- P2: second imaginary plane
- P3: third imaginary plane
- SA: speed
- SB: reference speed
- TA: accumulated time
- TA1: first accumulated time
- TA2: second accumulated time
- TB1: first limit time
- TB2: second limit time
- TB: limit time
- VA: voltage
- VB: reference voltage
- θA: inclination angle
- θA1: first inclination angle
- θA2: second inclination angle
- θB: reference angle
- X: longitudinal direction of straddled electric vehicle
- Y: transverse direction of straddled electric vehicle
- Z: up-down direction of straddled electric vehicle

## Claims

1. A battery device comprising:
a battery supplying electric power to an electric motor propelling a straddled electric vehicle;
an inclination sensor detecting an inclination angle of the battery; and
a control unit acquiring an accumulated time during which the battery is in an inclined state on the basis of a detection result of the inclination sensor, and executing a specific operation on the battery when the accumulated time exceeds a limit time.

2. The battery device according to claim 1, wherein
the control unit includes:
a storage unit storing the limit time;
a time counting unit measuring an inclination period in which the battery is in the inclined state on the basis of the detection result of the inclination sensor, and integrating the inclination period to obtain the accumulated time;
a time determination unit comparing the limit time stored in the storage unit with the accumulated time obtained by the time counting unit, and determining whether the accumulated time exceeds the limit time; and
an execution unit executing the specific operation when the time determination unit determines that the accumulated time exceeds the limit time.

3. The battery device according to claim 1 or 2, wherein the limit time is 1 year or more.

4. The battery device according to any one of claims 1 to 3, wherein
the battery includes:
a case;
a terminal attached to the case via an insulator; and
an electrolytic solution stored inside the case,
the terminal penetrates the case and is inserted into the case from outside the case, and
the case and the electrolytic solution are electrically connected.

5. The battery device according to claim 4, wherein
the case includes a top plate which is an upper part of the case,
the terminal penetrates the top plate and is inserted into the case from outside the case, and
the top plate and the terminal are electrically insulated by the insulator.

6. The battery device according to claim 5, wherein the inclination angle of the battery is a first inclination angle between a first imaginary plane parallel to the top plate of the battery and a second imaginary plane perpendicular to a direction of gravity.

7. The battery device according to claim 5, wherein the inclination angle of the battery is a second inclination angle between a first imaginary plane parallel to the top plate of the battery and a third imaginary plane perpendicular to a direction of acceleration acting on the battery.

8. The battery device according to any one of claims 1 to 7, wherein the inclination sensor is attached to the battery.

9. The battery device according to any one of claims 1 to 8, wherein the specific operation includes a first operation of discharging the battery through a discharging unit.

10. The battery device according to claim 9, wherein
in a case where a first standby condition is satisfied when the accumulated time exceeds the limit time, the control unit waits for start of the first operation, and
the first standby condition is that an operation of the electric motor according to an operation of an accelerator of the straddled electric vehicle is allowed.

11. The battery device according to any one of claims 1 to 10, wherein the specific operation includes a second operation of prohibiting supply of electric power from the battery to the electric motor.

12. The battery device according to any one of claims 1 to 11, wherein the specific operation includes a third operation of prohibiting charging of the battery.

13. The battery device according to any one of claims 1 to 12, wherein when the inclination sensor is abnormal, the control unit executes the specific operation.

14. The battery device according to any one of claims 1 to 13, wherein the battery is attachable to and detachable from the straddled electric vehicle.

15. A straddled electric vehicle comprising:
an electric motor propelling the straddled electric vehicle; and
a battery device, wherein
the battery device includes:
a battery supplying electric power to the electric motor;
an inclination sensor detecting an inclination angle of the battery; and
a control unit acquiring an accumulated time during which the battery is in an inclined state on the basis of a detection result of the inclination sensor, and executing a specific operation on the battery when the accumulated time exceeds a limit time.
